# EUROPÄISCHE PATENTSCHRIFT

(11) **EP 4 248 168 B1**
(45) Veröffentlichungstag und Bekanntmachung des Hinweises auf die Patenterteilung: **09.07.2025**
(21) Anmeldenummer: 21816045.5
(22) Anmeldetag: 22.11.2021
(51) Int. Cl.: G01B 9/02001, G01B 9/02015, G01B 9/02, G01M 11/00, G01M 11/02

(54) **EINZELBILD-TILTED WAVE INTERFEROMETER**
SINGLE FRAME-TILTED WAVE INTERFEROMETER
INTERFÉROMÈTRE À ONDES INCLINÉES À TRAME UNIQUE

(30) Priorität: 20.11.2020 DE 102020130814
(43) Veröffentlichungstag der Anmeldung: 27.09.2023
(73) Patentinhaber: Universität Stuttgart, 70174 Stuttgart (DE)
(72) Erfinder: PRUSS, Christof, 73760 Ostfildern (DE); SCHOBER, Christian, 74360 Ilsfeld (DE)
(74) Vertreter: DREISS Patentanwälte PartG mbB
(86) Internationale Anmeldenummer: PCT/EP2021/082534
(87) Internationale Veröffentlichungsnummer: WO 2022/106694

(56) Entgegenhaltungen:
- US-A1- 2013 113 925
- GARBUSI EUGENIO ET AL: "Advanced studies on the measurement of aspheres and freeform surfaces with the tilted-wave interferometer", OPTICAL MEASUREMENT SYSTEMS FOR INDUSTRIAL INSPECTION VII, SPIE, 1000 20TH ST. BELLINGHAM WA 98225-6705 USA, vol. 8082, no. 1, 23 May 2011 (2011-05-23), pages 1 - 11, XP060013253, DOI: 10.1117/12.895006
- SRIVASTAVA VISHAL ET AL: "Single Shot White Light Interference Microscopy for 3D Surface Profilometry Using Single Chip Color Camera", JOURNAL OF THE OPTICAL SOCIETY OF KOREA, vol. 20, no. 6, 25 December 2016 (2016-12-25), KR, pages 784 - 793, XP055888404, ISSN: 1226-4776, Retrieved from the Internet <URL:http://koreascience.or.kr/article/JAKO201607959403187.pdf> DOI: 10.3807/JOSK.2016.20.6.784
- W. OSTEN ET AL: "Testing aspheric lenses: New approaches", OPTOELECTRONICS, INSTRUMENTATION AND DATA PROCESSING, vol. 46, no. 4, 1 August 2010 (2010-08-01), Moscow, pages 329 - 339, XP055337077, ISSN: 8756-6990, DOI: 10.3103/S8756699010040059
- GARBUSI E ET AL: "Interferometer for precise and flexible asphere testing", OPTICS LETTERS, OPTICAL SOCIETY OF AMERICA, US, vol. 33, no. 24, 15 December 2008 (2008-12-15), pages 2973 - 2975, XP001521068, ISSN: 0146-9592, DOI: 10.1364/OL.33.002973
- BEISSWANGER ROLF ET AL: "Tilted wave interferometer in common path configuration: challenges and realization", SPIE PROCEEDINGS; [PROCEEDINGS OF SPIE ISSN 0277-786X], SPIE, US, vol. 11056, 21 June 2019 (2019-06-21), pages 110561G - 110561G, XP060122738, ISBN: 978-1-5106-3673-6, DOI: 10.1117/12.2526175
- INES FORTMEIER ET AL: "Evaluation of absolute form measurements using a tilted-wave interferometer", OPTICS EXPRESS, vol. 24, no. 4, 22 February 2016 (2016-02-22), US, pages 3393, XP055336223, ISSN: 2161-2072, DOI: 10.1364/OE.24.003393
- ANDREAS PFÖRTNER ET AL: "Red-Green-Blue Interferometer for the Metrology of Discontinuous Structures", APPLIED OPTICS, vol. 42, no. 4, 1 January 2003 (2003-01-01), pages 667, XP055076293, ISSN: 0003-6935, DOI: 10.1364/AO.42.000667
- KATSUICHI KITAGAWA: "Multi-wavelength single-shot interferometry", 2009 INTERNATIONAL SYMPOSIUM ON OPTOMECHATRONIC TECHNOLOGIES (ISOT 2009) : ISTANBUL, TURKEY, 21 - 23 SEPTEMBER 2009, IEEE, PISCATAWAY, NJ, USA, 21 September 2009 (2009-09-21), pages 34 - 39, XP031563491, ISBN: 978-1-4244-4209-6
- TIAN XIAOBO ET AL: "Snapshot multi-wavelength interference microscope", OPTICS EXPRESS, vol. 26, no. 14, 2 July 2018 (2018-07-02), pages 18279, XP055889215, Retrieved from the Internet <URL:https://www.osapublishing.org/viewmedia.cfm?URI=oe-26-14-18279> [retrieved on 20220208], DOI: 10.1364/OE.26.018279
- LI JIA ET AL: "New technique for generating light source array in tilted wave interferometer", PROCEEDINGS OF SPIE; [PROCEEDINGS OF SPIE ISSN 0277-786X VOLUME 10524], SPIE, US, vol. 10329, 26 June 2017 (2017-06-26), pages 1032928 - 1032928, XP060091107, ISBN: 978-1-5106-1533-5, DOI: 10.1117/12.2271603

## Beschreibung

Die vorliegende Erfindung betrifft ein Interferometer und ein Verfahren zur flächenhaften Vermessung einer Oberfläche oder optischen Dicke eines optisch glatten Prüflings. Zur Vermessung optischer Oberflächen bieten sich Interferometer als genaue und schnelle Messvorrichtungen an. Interferometer nutzen die Welleneigenschaft des Lichtes. Bei der Überlagerung einer bekannten Referenzwelle und einer dazu kohärenten und von der Oberfläche eines Prüflings üblicherweise deformierten Objektwelle entstehen Bereiche mit Auslöschung und Bereiche mit Lichtverstärkung. Das entstehende Intensitätsbild, das Interferogramm, enthält die Information über die Abweichung des Prüflings von der Sollform und kann ausgewertet werden.

Ein Interferometer mit den Merkmalen des Oberbegriffs des Anspruchs 1 und ein Verfahren nach dem Oberbegriff des Anspruchs 10 wird als bekannt vorausgesetzt.

Das bekannte Interferometer, das in einer Ausführung beispielsweise in [Garbusi, Eugenio; Pruss, Christof; Osten, Wolfgang: "Interferometer for precise and flexible asphere testing" in Optics letters, 33, 2973-5 (2009), 10.1364/OL.33.002973] beschrieben ist, dient zur flächenhaften Vermessung einer Oberfläche oder optischen Dicke einer optisch glatten Komponente, wobei das Interferometer dazu eingerichtet ist, den optisch glatten Prüfling mit mehreren Beleuchtungskonfigurationen zu beleuchten und von dem Prüfling durch Reflektion an der zu vermessenden Oberfläche oder durch Transmission durch den Prüfling beeinflusste Objektwellen mit zu den Objektwellen kohärenten Referenzwellen auf wenigstens einem Bildaufnehmer (K) zu Interferogrammen zu überlagern.

Dabei ergibt sich jede Beleuchtungskonfiguration als die Gesamtheit der Objektwellen, mit denen der Prüfling gleichzeitig beleuchtet wird. Jede Objektwelle geht bevorzugt von einer lichtemittierenden Punktlichtquelle aus. Daher kann eine Beleuchtungskonfiguration auch als die Gesamtheit von lichtemittierenden Punktlichtquellen verstanden werden, von denen die genannten Objektwellen ausgehen. Dabei wird unter einer optisch glatten Oberfläche eine spiegelnd reflektierende Oberfläche verstanden.

Die zunehmende Verwendung von asphärischen oder freigeformten Oberflächen im Bereich des Optikdesigns erlaubt Optiksysteme mit höherer Abbildungsqualität und kompakteren Abmaßen, erfordert aber gleichzeitig eine fertigungsbegleitende Messtechnik für die Produktion. Die Fertigung von Optiken mit den genannten Genauigkeitsanforderungen ist nur möglich, wenn die Produktionsmaschinen eine Rückkopplung von der Messtechnik erhalten, damit zielgerichtet der nächste Korrekturschritt erfolgen kann. Auch im Bereich der Endkontrolle z.B. bei replizierten Optiken muss eine Oberflächenmessung die Qualität der Optik bestätigen und Abweichungen des Fertigungsprozesses möglichst früh erkannt werden. Für diese Rückkopplung ist eine schnelle, flexible und dennoch hochgenaue Messtechnik notwendig.

Bisherige Lösungen lassen sich in scannende und flächig messende Systeme unterteilen. Die scannenden Systeme vermessen den Prüfling Punkt für Punkt (z.B. taktile oder optische Koordinatenmessmaschinen) oder in einzelnen kleinen Flächenbereichen, die anschließend rechnerisch zusammengesetzt werden (z.B. Zygo Verifire Asphere scanning interferometer, QED SSiA stitching interferometer).

Durch die intrinsisch zeitsequenzielle Herangehensweise muss eine stabile Messumgebung gefordert werden und der Messvorgang erstreckt sich über viele Minuten bis zu einigen Stunden. Eine Integration in die Fertigung wird hierdurch erschwert, eine 100% Prüfung bei hohen Stückzahlen (Beispiel Optik-Präzisionsspritzguss) unmöglich.

Ein hohes Potenzial zur schnellen Messtechnik hat die Verwendung von sogenannten Nulloptiken. Dies sind für jeden neuen Typ von Asphäre oder Freiformfläche neu gerechnete und gefertigte Optiken, die die Wellenfront des Interferometers an den jeweiligen Prüfling anpassen. Der potenzielle Geschwindigkeitsvorteil wird jedoch mit den hohen Kosten und langen Lieferzeiten für die Nulloptiken erkauft.

Eine flexible interferometrische Messtechnik, mit der Asphären und Freiformoptiken schnell und mit geringer Messunsicherheit vermessen werden können, ist das am Institut für Technische Optik erfundene Tilted Wave Interferometer (TWI).

Das TWI erreicht durch eine besondere Beleuchtung und eine umfassende Erfassung und rechnerische Elimination der Systemfehler des Instruments eine Vermessung des Prüflings in einer Zeit von unter einer Minute, ohne dabei aufwändige Nulloptiken verwenden zu müssen.

Die Vermessung der Formtreue von optischen Komponenten erfordert eine Auflösung im Bereich von Bruchteilen der verwendeten Wellenlänge A (z.B. A/100, mit A z.B. im sichtbaren Bereich: 400 bis 800 nm) ergibt sich also eine Auflösung im Bereich von einstelligen Nanometern). Dies kann durch den Einsatz von flächenhaft messenden Interferometern im Bereich von sphärischen oder ebenen Flächen als gelöstes Problem betrachtet werden.

Im Gegensatz zur Vermessung sphärischer und ebener Oberflächen stellt die interferometrische Vermessung asphärischer Oberflächen jedoch eine in vielen Bereichen noch nicht befriedigend gelöste Aufgabe der optischen Messtechnik dar. Der Ursprung der auftretenden Probleme liegt darin, dass Nulltests an Asphären immer die Fertigung spezieller, an die Asphäre angepasster refraktiver oder diffraktiver Optiken als Nulllinsen erfordern.

Es werden bereits Nulloptiken für Asphären standardmäßig diffraktiv und refraktiv gefertigt, wobei eine diffraktive Struktur dazu verwendet wird, die sphärische Objektwelle eines Interferometerobjektivs so umzuformen, dass eine an den Prüfling angepasste Welle entsteht. Da Asphären in einer enormen Formenvielfalt gefertigt werden, ist die Erzeugung angepasster Nulllinsen jedoch mit einem großen Zeit- und Kostenaufwand verbunden.

Keine der Lösungen des Standes der Technik vermag es, eine Asphäre oder Freiformfläche in nur einer Kamerabelichtungszeit zu vermessen. Es müssen jeweils viele zeitsequenzielle Einzelmessungen aufgenommen werden, was die bekannten Verfahren anfällig für Umgebungseinflüsse macht. Einzig die Vermessung mit Nulloptiken hätte das Potenzial zur Vermessung in einer einzigen Kamerabelichtungszeitspanne, allerdings ist dieser Ansatz für viele Anwendungen durch die individuellen Nulloptiken zu aufwendig und zu teuer.

Es ist bekannt, dass Interferogramme, die durch Überlagerung von zwei Wellenfronten entstehen, durch verschiedene Methoden ausgewertet werden können, d.h. dass aus den mit einer Kamera registrierbaren Intensitätsverteilungen die Phasendifferenz zwischen den beiden Wellenfronten, im Folgenden kurz als Phase bezeichnet, bestimmt werden kann. Diese Phase trägt in der Interferometrie die Information über den Prüfling, weshalb ihre Bestimmung für jede interferometrische Messtechnik notwendig ist. Zu den bekannten Methoden zur Bestimmung der Phase gehört das sehr verbreitete Phasenschiebeverfahren, bei dem mehrere Kamerabilder aufgenommen werden müssen. Es sind jedoch auch Verfahren bekannt, bei denen die Phase aus nur einem Kamerabild bestimmt werden kann.

Aus dem abstract der WO2005052502A2 ist ein Phasendifferenzsensor bekannt, der eine räumlich aufgelöste Phasendifferenz zwischen orthogonal polarisierten Referenz- und Testwellenfronten misst. Der Sensor ist als pixelierte Phasenmaske aufgebaut, die auf ein pixeliertes Detektorarray ausgerichtet und auf diesem abgebildet ist. Jedes benachbarte Pixel der Phasenmaske misst eine vorbestimmte relative Phasenverschiebung zwischen den zirkular orthogonal polarisierten Referenz- und Teststrahlen. Somit sollen mehrere phasenverschobene Interferogramme gleichzeitig synthetisiert werden können, indem Pixel mit identischen Phasenverschiebungen kombiniert werden. Die mehrfach phasenverschobenen Interferogramme sollen kombiniert werden können, um die Phasendifferenz zwischen Referenz- und Testwellenfront zu berechnen. Jede Konfiguration eines Interferometers, das orthogonal polarisierte Referenz- und Objektstrahlen erzeugt, soll mit dem Phasendifferenzsensor kombiniert werden können, um Einzelschuss-Messungen zur gleichzeitigen Phasenverschiebung bereitzustellen.

Ein weiteres Verfahren, mit dem die Phase aus nur einem Kamerabild bestimmt werden kann, ist das sogenannte Trägerfrequenzverfahren, bei dem die Phase nach dem Prinzip der Seitenbandmodulation gewonnen werden kann, siehe zum Beispiel [Mitsuo Takeda, Hideki Ina, and Seiji Kobayashi, "Fourier-transform method of fringe-pattern analysis for computer-based topography and interferometry," J. Opt. Soc. Am. 72, 156-160 (1982)].

Das bislang schnellste flexible Verfahren, das TWI, benötigt typischerweise vier Phasenmessungen bei unterschiedlichen Beleuchtungsverteilungen, die jeweils 5 Kameraaufnahmen erfordern.

Aus der Veröffentlichung [X.Tian, u.a.: " Snapshot multiwavelength interference microscope, Opt. Express 26, 18279 - 18291 (2018), DOI: 10.1364/OE.26.018279] ist ein Einzelbild-Mehrwellenlängeninterferometer zur flächenhaften Vermessung einer Oberfläche bekannt, bei dem die Oberfläche mit aus gleichen Richtungen einfallendem Licht verschiedener Farben beleuchtet wird und bei dem von der Oberfläche ausgehendes Licht in wellenlängenindidviduelle Teilinterferogramme zerlegt wird. Tian et al. erreichen damit, dass die für die Mehrwelleninterferometrie notwendige Information über die Phase aller drei Wellenlängen gleichzeitig in jedem Pixel verfügbar ist.

Vor diesem Hintergrund besteht die Aufgabe der Erfindung in der Angabe eines Verfahrens und einer Messvorrichtung der jeweils eingangs genannten Art, mit der sich optische Flächen mit verringertem Zeitaufwand ohne Nulloptiken genau vermessen lassen.

Diese Aufgabe wird bei einem Interferometer durch die Merkmale des Anspruchs 1 und bei einem Verfahren durch die Merkmale des Anspruchs 10 gelöst.

Das erfindungsgemäße Interferometer zeichnet sich dabei dadurch aus, dass jede Beleuchtungskonfiguration durch einen eigenen Farbkanal, bzw. durch Objektwellen mit Wellenlängen aus einem zusammenhängenden Wellenlängenbereich, der eine wellenlängenbereichsindividuelle zentrale Wellenlänge aufweist, realisiert wird, wobei eine erste der Beleuchtungskonfigurationen nur Objektwellen aus einem Wellenlängenbereich aufweist, der eine erste zentrale Wellenlänge aufweist und wobei eine zweite der Beleuchtungskonfigurationen nur Objektwellen aus einem Wellenlängenbereich aufweist, der eine zweite zentrale Wellenlänge aufweist, und wobei eine dritte der Beleuchtungskonfigurationen nur Objektwellen aus einem Wellenlängenbereich aufweist, der eine dritte zentrale Wellenlänge aufweist, wobei die erste zentrale Wellenlänge von der zweiten zentralen Wellenlänge verschieden ist, wobei die dritte zentrale Wellenlänge von der ersten zentralen Wellenlänge und von der zweiten zentralen Wellenlänge verschieden ist und wobei das Interferometer dazu eingerichtet ist, den Prüfling gleichzeitig mit Objektwellen der ersten Beleuchtungskonfiguration und der zweiten Beleuchtungskonfiguration und der dritten Beleuchtungskonfiguration aus diskret verschiedenen (d.h. nicht parallelen) Richtungen zu beleuchten und nach einer Wechselwirkung mit dem Prüfling von diesem ausgehende Objektwellen auf dem Bildaufnehmer zu überlagern und wobei der Bildaufnehmer dazu eingerichtet ist, die durch die Überlagerung entstehenden Interferogramme spektral in wellenlängenindividuelle Teilinterferogramme zu zerlegen.

Durch die Erfindung wird das bisher verwendete zeitsequentielle Durchschalten von Beleuchtungskonfigurationen durch die Verwendung von Spektralinformationen zeitlich parallelisiert Jede Beleuchtungskonfiguration wird durch einen eigenen Farbkanal, bzw. eine eigene zentrale Wellenlänge, realisiert. Das heißt, dass der Aufbau nicht nur durch eine Lichtquelle beleuchtet wird, sondern durch beispielsweise drei oder vier Laserlichtquellen unterschiedlicher Wellenlänge. Die Erfindung erlaubt es, Präzisionsoptiken wie Asphären und Freiformflächen in kürzester Zeit mit geringer Messunsicherheit zu vermessen. Damit wird es möglich, den für die Optikfertigung notwendigen Messvorgang in die Fertigung zu integrieren, was durch die Einsparung von Prüflingslogistik und Messzeit die Produktivität stark erhöhen kann. Durch die Erfassung der gesamten Prüflingstopographie in einer Belichtungszeit wird der Einfluss von instabilen Umgebungsbedingungen auf ein Minimum reduziert. Neue Messansätze wie die Vermessung von sich bewegenden Prüflingen werden ermöglicht. Die Einzelbild-TWI-Messtechnik ermöglicht die interferometrische Vermessung von veränderlichen Prüflingen, beispielsweise von sich bewegenden Prüflingen in der Serienfertigung. Auch formveränderliche Prüflinge wie zum Beispiel die Hornhaut, schwingende Oberflächen oder das dynamische Verhalten von Astronomiespiegeln können mit der erfindungsgemäßen Einzelbild-TWI-Messtechnik mit hoher Messgenauigkeit vermessen werden.

Starke Asphären und Freiformflächen in nur einer Belichtungszeit flexibel ohne die Verwendung von speziellen Nulloptiken vermessen zu können, ist neu. Es gelingt durch die Erfindung, den bei der TWI bisher notwendigen zeitsequenziellen Beleuchtungskonfigurationswechsel durch ein paralleles, wellenlängensepariertes Beleuchtungsschema zu ersetzen, das gleichzeitig ermöglicht, einzelbildbasierte Phasenauswerteverfahren einzusetzen.

Bevorzugt ist auch, dass eine vierte der Beleuchtungskonfigurationen nur Objektwellen aus einem Wellenlängenbereich aufweist, der eine vierte zentrale Wellenlänge aufweist, wobei die vierte zentrale Wellenlänge von der ersten zentralen Wellenlänge, der zweiten zentralen Wellenlänge und der dritten zentralen Wellenlänge verschieden ist, und wobei das Interferometer dazu eingerichtet ist, den Prüfling gleichzeitig mit Objektwellen der ersten Beleuchtungskonfiguration und der zweiten Beleuchtungskonfiguration und der dritten Beleuchtungskonfiguration und der vierten Beleuchtungskonfiguration aus diskret verschiedenen Richtungen zu beleuchten und nach einer Wechselwirkung mit dem Prüfling von diesem ausgehende Objektwellen auf dem Bildaufnehmer zu überlagern und wobei der Bildaufnehmer dazu eingerichtet ist, die durch die Überlagerung entstehenden Interferogramme spektral in wellenlängenindividuelle Teilinterferogramme zu zerlegen.

Eine weitere bevorzugte Ausgestaltung zeichnet sich dadurch aus, dass das Interferometer dazu eingerichtet ist, die optisch glatte Komponente gleichzeitig mit der ersten Beleuchtungskonfiguration und der zweiten Beleuchtungskonfiguration, oder gleichzeitig mit der ersten Beleuchtungskonfiguration und der zweiten Beleuchtungskonfiguration und der dritten Beleuchtungskonfiguration, oder gleichzeitig mit den vier Beleuchtungskonfiguration zu beleuchten. Jede Beleuchtungskonfiguration kann eine Objektwelle oder eine Gruppe von Objektwellen aufweisen, wobei die Gruppe auch bis zu mehreren hundert Objektwellen aufweisen kann.

Bevorzugt ist vorgesehen, dass Objektwellen, die in zueinander nächstbenachbarten Richtungen propagieren, also zum Beispiel von zwei zueinander nächstbenachbart angeordneten Punktlichtquellen ausgehen, nicht Wellenlängen aus demselben Wellenlängenbereich aufweisen. Es sind prinzipiell auch Konfigurationen denkbar, bei denen die Punktlichtquellen virtuelle Punktlichtquellen sind.

Weiter ist bevorzugt, dass das Interferometer dazu eingerichtet ist, Interferogramme durch geeignete Farbfilter so zu trennen, dass jedes Pixel des/der Kameradetektoren im Wesentlichen nur die Interferogramminformation von nur einem Wellenlängenbereich detektiert.

Bevorzugt ist vorgesehen, dass die Objektwellen von Punktlichtquellen ausgehen.

Eine weitere bevorzugte Ausgestaltung zeichnet sich dadurch aus, dass die Punktlichtquellen so angeordnet sind, dass jede Lichtquelle im Zentrum eines gedachten regelmäßigen Sechsecks angeordnet ist, wobei die Sechsecke in einer Ebene lückenlos aneinander angrenzen und dass Sechsecke, in deren Zentrum eine Lichtquelle angeordnet ist, die Licht einer zentralen Wellenlänge oder mit Wellenlängen aus einem der Wellenlängenbereiche mit einer zentralen Wellenlänge abgibt, nur an Sechsecke angrenzt, in deren Zentrum eine Licht einer anderen Wellenlänge oder Wellenlängen aus einem anderen der Wellenlängenbereiche abgebende Lichtquelle angeordnet ist.

Bevorzugt ist auch, dass die Punktlichtquellen so angeordnet sind, dass jede Lichtquelle im Zentrum eines gedachten regelmäßigen Quadrates angeordnet ist, wobei die Quadrate in einer Ebene lückenlos aneinander angrenzen und wobei Quadrate, in deren Zentrum eine Lichtquelle angeordnet ist, die Licht einer zentralen Wellenlänge oder mit Wellenlängen aus einem der Wellenlängenbereiche abgibt, nur an Quadrate angrenzt, in deren Zentrum eine Licht einer anderen Wellenlänge oder Licht aus einem anderen Wellenlängenbereich abgebende Lichtquelle angeordnet ist.

Weiter ist bevorzugt, dass der Detektor auf seinen einzelnen Pixeln neben Farbfiltern zusätzlich Polarisationsfilter mit pixelweise unterschiedlichen Orientierungen aufweist.

Eine weitere bevorzugte Ausgestaltung zeichnet sich dadurch aus, dass die Vielzahl von Punktlichtquellen für jede zentrale Wellenlänge, bzw. für jeden der Wellenlängenbereiche , bzw. für jeden Farbkanal, eine Anordnung einer kohärenten Laserquelle, eines Kepler-Fernrohrs und eines Punktlichtquellenarrays ist, das aus einem transparenten Substrat, bspw. einem Glassubstrat besteht, auf dessen dem Fernrohr zugewandter Lichteintrittsseite sich Mikrolinsen befinden, deren Fokus in der Ebene einer Lichtaustrittsseite des Substrates liegt, wo sich ein Blendenarray befindet, von dem Objektwellen aus einem der Wellenlängenbereiche ausgehen. Die Mikrolinsen können zum Beispiel refraktiv, also mit kontinuierlicher Oberfläche ausgeführt werden, oder diffraktiv, also als Fresnel-Zonenplatten, oder als Mischform dieser Ausführungen.

Bevorzugt ist auch, dass die Vielzahl von Punktlichtquellen für jede zentrale Wellenlänge, bzw. für jeden der Wellenlängenbereiche eine Anordnung aus Lichtleitfaserenden aufweist, die mit einem oder mehreren optischen Kopplern an eine Licht der zentralen Wellenlänge emittierende Laserquelle angekoppelt ist.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind. Der Schutzbereich wird durch die Ansprüche definiert.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: ein Ausführungsbeispiel eines bekannten Interferometers;
- Figur 2: eine Lichtaustrittsseite eines Punktlichtquellenarrays mit in Zeilen und Spalten angeordneten Punktlichtquellen;
- Figur 3: drei gegeneinander verkippte Objektwellenfronten, die auf eine optisch glatte Fläche einfallen;
- Figur 4a: Umrisse eines Interferogramms, das mit je vier Punktlichtquellen pro Zeile und pro Spalte aufgenommen worden ist, wobei alle Punktlichtquellen gleichzeitig eingeschaltet worden waren;
- Figur 4b: vier mit demselben Interferometer aufgenommene Muster von Interferogramm-patches, die sich bei zeitsequentieller Aufnahme ergeben;
- Figur 5: eine Draufsicht auf ein Farbmosaik-Punktlichtquellenarray mit einer ersten Anordnung von Punktlichtquellen;
- Figur 6: eine Seitenansicht eines Farbmosaik-Punktlichtquellenarrays;
- Figur 7: eine Seitenansicht eines alternativen Punktlichtquellenarrays auf Basis von Lichtleitfasern;
- Figur 8: eine Draufsicht auf ein Farbmosaik-Punktlichtquellenarray mit einer zweiten Anordnung von Punktlichtquellen;
- Figur 9: ein Twyman-Green Tilted Wave Interferometer;
- Figur 10: ein Fizeau-Tilted Wave Interferometer;
- Figur 11: ein Interferometer vom Mach-Zehnder Typ; und
- Figur 12: ein Flussdiagramm als Ausführungsbeispiel eines erfindungsgemäßen Verfahrens.

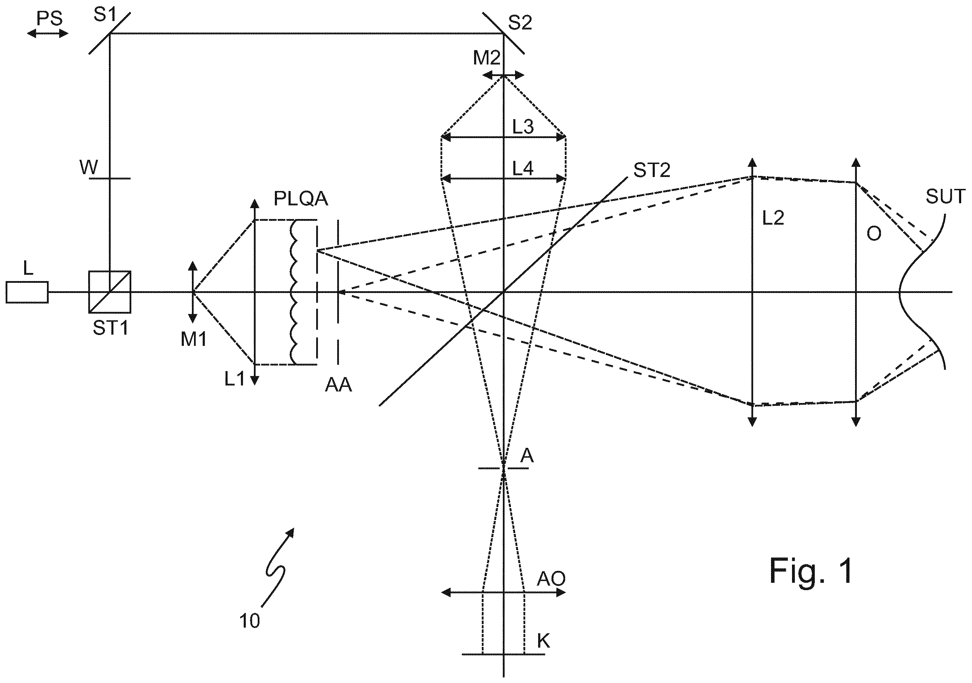

Figur 1 zeigt im Einzelnen ein Interferometer, das mit verkippten Wellenfronten arbeitet. Das Licht einer kohärenten Laserquelle L, das nur eine zentrale Wellenlänge aufweist (definiert als die Wellenlänge eines schmalen Wellenlängenbereichs, welche die größte Intensität aufweist), wird durch einen polarisierenden ersten Strahlteiler ST1 in einen Prüf- sowie einen Referenzstrahlengang aufgeteilt. Das Licht im Prüfstrahlengang wird von einem Kepler-Fernrohr, bestehend aus einem ersten Mikroskopobjektiv M1 sowie einer Kollimationslinse L1, aufgeweitet und beleuchtet das Punktlichtquellenarray PLQA. Das PLQA besteht aus einem Quarzglassubstrat, auf dessen der Kollimationslinse zugewandter Lichteintrittsseite sich diffraktive Mikrolinsen befinden. Der Fokus der Mikrolinsen liegt in der Ebene der eine Lichtaustrittsseite bildenden Substratrückseite, die mit Chrom bedampft ist. Die Chromschicht weist zu jeder Mikrolinse korrespondierend eine Raumfilterblende auf, welche die unerwünschten Beugungsordnungen der Mikrolinsen ausblendet und als Raumfilter für die Wellenfronten dient. Zusätzlich befindet sich hinter dem PLQA ein relativ zum PLQA verschiebbares Lochblendenarray AA, das nur das Licht jeder vierten Mikrolinse durchlässt.

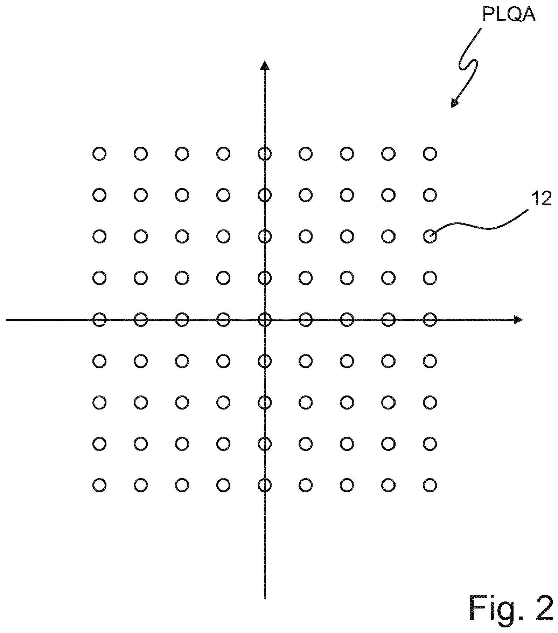

Figur 2 zeigt schematisch eine Draufsicht auf eine Lichtaustrittsseite des Punktlichtquellenarrays mit in Zeilen und Spalten angeordneten Punktlichtquellen, von denen jede eine der Mikrolinsen und eine Blende des Lochblendenarrays aufweist. Es gibt ¼ der Anzahl von Lochblenden im Vergleich zu Mikrolinsen.

Die Zeilen und Spalten sind rechtwinklig zueinander angeordnet. Das Lochblendenarray deckt jede zweite Punktlichtquelle ab. Durch parallel zu den Zeilen und Spalten erfolgendes Verschieben des Lochblendenarrays lassen sich vier Punktlichtquellenkonfigurationen bilden. Damit lassen sich vier gegeneinander verkippte Beleuchtungskonfigurationen erzeugen.

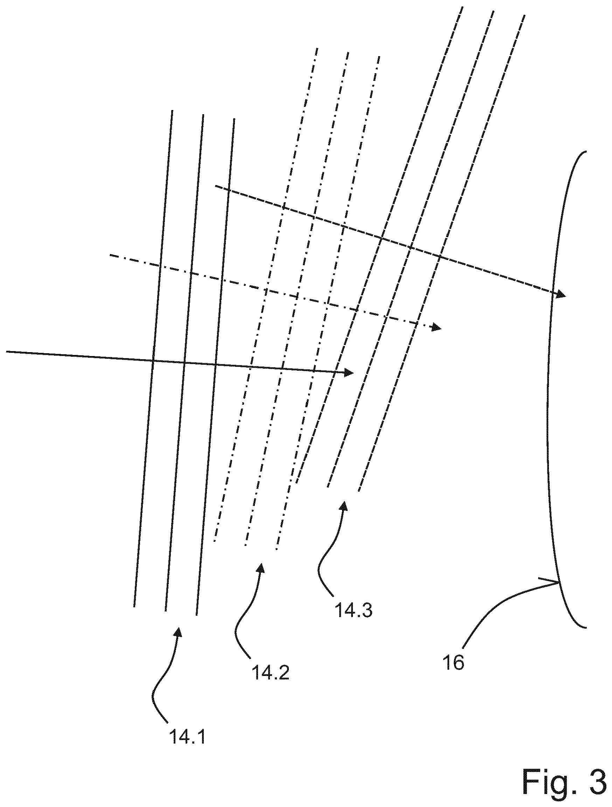

Figur 3 zeigt als Beispiel drei gegeneinander verkippte Wellenfronten 14.1, 14.2, 14.3 von Objektwellen, die auf eine optisch glatte Fläche einfallen.

Figur 1 zeigt weiter, dass von den Punktlichtquellen ausgehendes Licht einen zweiten Strahlteiler ST2 passiert und mittels einer Kollimationslinse L2 kollimiert wird, wodurch ein Array von Wellenfronten der Objektwellen mit unterschiedlicher Kippung entsteht.

Die Wellenfronten der Objektwellen werden durch das Interferometerobjektiv O zu sphärischen Wellenfronten transformiert, um die Grundkrümmung des Prüflings SUT zu kompensieren. Nach der Reflektion am Prüfling SUT propagieren die Wellenfronten zurück zum zweiten Strahlteiler ST2, von dem sie in einen Bildaufnehmerstrahlengang reflektiert werden. In der Fourier-Ebene des Interferometers 10 befindet sich eine Blende A mit quadratischer Apertur, welche alle Bereiche der Wellenfronten, deren Streifendichte die Nyquist-Frequenz eines Bildaufnehmers K (z.B. einer Kamera) überschreiten würden, ausblendet. Nach der Blende A passiert das Licht die Abbildungsoptik AO und trifft auf den Bildaufnehmer K.

Im Referenzstrahlengang wird die Polarisation des Lichts nach Austritt aus dem polarisierenden ersten Strahlteiler ST1 durch das Lambda/2-Plättchen W um *π* gedreht, so dass die Polarisation der Referenzwelle mit der Polarisation der am Prüfling SUT reflektierten Objektwellen (Prüfwellen) übereinstimmt. Der Strahl wird mithilfe zweier Spiegel S1, S2 umgelenkt, wobei einer der Spiegel auf einen Piezoaktuator PS montiert ist, um die Wellenfronten mittels Phasenschiebeverfahren auswerten zu können. Das Licht wird von einem Kepler-Fernrohr, bestehend aus einem zweiten Mikroskopobjektiv M2 sowie einer Linse L3, aufgeweitet und anschließend von einer Linse L4 in eine kugelförmige Wellenfront transformiert. Der Fokus der Referenzwellenfront befindet sich in der Mitte der Blende A. Anschließend passiert das Licht die Abbildungsoptik AO und trifft auf den Bildaufnehmer K, in dessen Ebene es mit dem Licht der Prüfwellenfronten interferiert.

Jede Punktlichtquelle erzeugt auf dem Bildaufnehmer K zumeist einen Messbereich in Form eines kleinen Interferogramms ("patch"), das ausgewertet werden kann. Das Lochblendenarray AA wird für eine vollständige Messung viermal verschoben. In jeder der vier Positionen wird eine Teilmessung durchgeführt, indem die Phase, d.h. ein im Bereich der Patches durch unterschiedliche optische Weglängen der Objektwellen und der Referenzwellen bedingter Phasenunterschied zwischen Objektwellen und Referenzwellen, mittels phasenschiebender Interferometrie (PSI) bestimmt wird.

Der Abstand der Lichtquellen 12 im PLQA ist so gewählt, dass Strahlen über sämtliche Punkte der Prüflingsoberfläche, welche innerhalb der numerischen Apertur NA des Interferometerobjektivs O liegen, auf dem Bildaufnehmer eintreffen und sich die Bereiche des Bildaufnehmers, die von benachbarten Punktlichtquellen abgedeckt werden, leicht überlappen. Dadurch ist gewährleistet, dass in einer Messung Information über die gesamte Prüflingsoberfläche enthalten ist.

Die vier Teilmessungen werden anschließend zum gesamten Messergebnis verrechnet. Der Sinn der Aufteilung in vier Teilmessungen ist, die Überlagerung der einzelnen Bereiche der verschiedenen Punktlichtquellen, die sogenannten Patches einer Teilmessung, zu vermeiden. Nur so können die Interferogramme der Teilmessungen mit geringer Messunsicherheit ausgewertet werden.

Jede Beleuchtungskonfiguration (Punktlichtquellenkonfiguration) erzeugt je nach Form des Prüflings keinen, einen oder mehrere Patches. Die genaue Verteilung der Patches hängt von der Form des Prüflings, seiner Lage sowie von dem verwendeten Interferometerdesign ab.

Allerdings ist es nicht möglich, diese überlappenden Bereiche mit Standard-Methoden der Interferometrie auszuwerten, da die entstehenden Interferogramme nicht mehr aus zwei Wellenfronten entstehen, sondern Vielstrahlinterferenz auftritt.

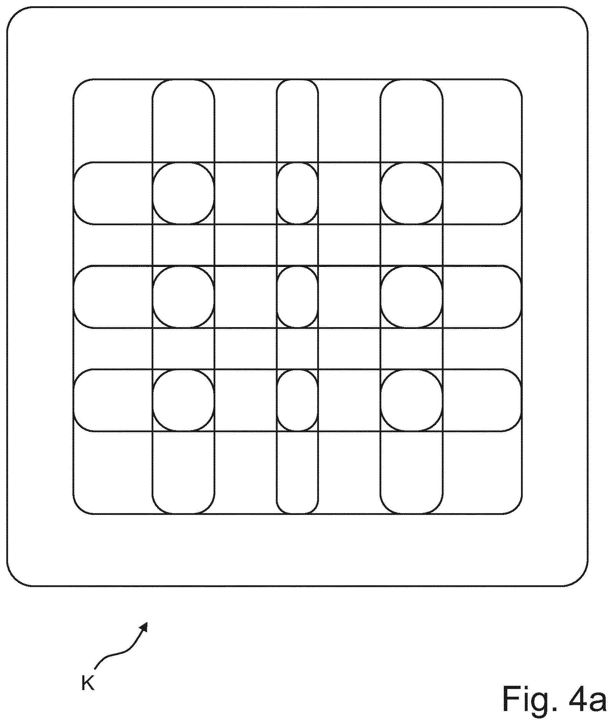

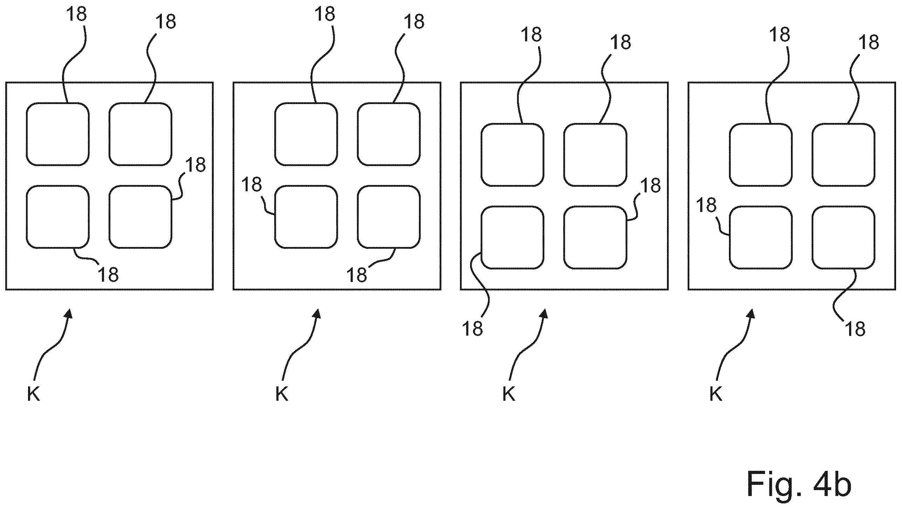

Fig. 4 a zeigt schematisch ein Interferogramm auf dem Bildaufnehmer K, das mit je vier Punktlichtquellen pro Zeile und pro Spalte aufgenommen worden ist, wobei alle Punktlichtquellen gleichzeitig eingeschaltet worden waren. Dann überlappen sich die mit Licht der einzelnen Punktlichtquellen erzeugten Interferogramm-patches. In den schraffierten Überlappbereichen sind die Interferogramme nicht auswertbar.

Figur 4 b zeigt vier mit demselben Interferometer aufgenommene Muster von Interferogramm-patches 18, die sich ergeben, wenn jeweils nur jede zweite Punktlichtquelle eingeschaltet ist, für vier verschiedene Beleuchtungskonfigurationen. Diese Muster sind zeitsequentiell, jeweils eines zu einer Zeit, aufgenommen worden. Ein Beispiel einer Beleuchtungskonfiguration ergibt sich zum Beispiel dann, wenn in jeder Zeile und in jeder Spalte einer kartesischen Anordnung von Punktlichtquellen nur die geradzahligen Punktlichtquellen eingeschaltet sind (andere Konfigurationen: geradzahlige Punktlichtquellen in Zeilen i.V. mit ungeradzahligen Punktlichtquellen in Spalten eingeschaltet; ungeradzahlige Punktlichtquellen in Zeilen i.V. mit geradzahligen Punktlichtquellen in Spalten eingeschaltet; ungeradzahlige Punktlichtquellen in Zeilen i.V. mit ungeradzahligen Punktlichtquellen in Spalten eingeschaltet). Die Patches 18 überlagern sich dann nicht und sind daher auswertbar. Das Muster der Figur 4 a ergibt sich dann, wenn die patches 18 der Figur 1 b alle übereinander gelegt werden, bzw. dann, wenn alle Punktlichtquellen 18, mit denen die patches 18 der Figur 4b erzeugt werden, gleichzeitig zur Belichtung des Bildaufnehmers beitragen.

Aus den vier Phasenmessungen lässt sich die Formabweichung des Prüflings SUT von seiner nominellen Form bestimmen. Da man bei der Phasenschiebe-Interferometrie im Unterschied zu dem o.g. Trägerfrequenz-Verfahren, das eine Phasenmessung mit nur einem Bild ermöglicht, mindestens drei Bildaufnahmen für eine Phasenmessung aufnehmen muss (typisch sind eher 5 oder mehr) und somit mindestens 12, eher 20 zwangsläufig zeitsequentiell aufgenommene Kamerabilder für eine vollständige Messung benötigt, ergibt sich bisher eine Messzeitspanne, die im Bereich von einer halben Minute liegt. In dieser Zeitspanne können instabile Umweltbedingungen wie Vibrationen, Driften und Luftturbulenzen das Messergebnis verfälschen.

Beim erfindungsgemäßen Ansatz erfolgt an Stelle der zeitsequentiellen Aufnahme von jeweils mit einer einzigen zentralen Wellenlänge erzeugten Interferogrammen eine einzelne Aufnahme eines Kamerabildes mit Objektwellen, die voneinander verschiedene Wellenlängen besitzen und damit voneinander verschiedene Interferogramme erzeugen, die durch wellenlängenabhängige Filterung voneinander separierbar sind.

Im Einzelnen zeichnet sich das erfindungsgemäße Interferometer dadurch aus, dass eine erste der Objektwellen, die in eine erste der diskret verschiedenen Richtungen propagiert, eine erste zentrale Wellenlänge aufweist und dass eine zweite der Objektwellen, die in eine zweite der diskret verschiedenen Richtungen propagiert, eine zweite zentrale Wellenlänge aufweist, und dass eine dritte der Objektwellen, die in eine dritte der diskret verschiedenen Richtungen propagiert, eine dritte zentrale Wellenlänge aufweist, und dass das Interferometer dazu eingerichtet ist, die optisch glatte Komponente gleichzeitig mit der ersten Objektwelle und der zweiten Objektwelle und der dritten Objektwelle, oder gleichzeitig mit den vier Objektwellen zu beleuchten. Diese Beleuchtungskonfiguration ergibt sich zum Beispiel in der Figur 3 mit den drei Objektwellen 14.1, 14.2, 14.3 als erste, zweite und dritte Objektwelle, wobei diese Objektwellen voneinander verschiedene Wellenlängen aufweisen.

Die Grundidee der Erfindung besteht damit darin, das zeitsequentielle Durchschalten der Beleuchtungskonfigurationen durch die Verwendung von Spektralinformationen zu parallelisieren und damit die zeitversetzte Aufnahme von mehreren Beleuchtungskonfigurationen durch eine Aufnahme zu ersetzen.

Bei dem erfindungsgemäßen Interferometer wird jede Beleuchtungskonfiguration durch einen eigenen Farbkanal, bzw. durch einen Wellenlängenbereich, der eine zentrale Wellenlänge aufweist, realisiert. Die Farben, bzw. die Wellenlängen werden am Bildaufnehmer K durch wellenlängenselektive Filter von den anderen Beleuchtungskonfigurationen/Wellenlängen separiert.

Dabei ist eine Beleuchtungskonfiguration nicht auf eine Objektwelle beschränkt, sondern kann eine Vielzahl von gegeneinander diskret verkippten Objektwellenfronten enthalten. In diskret verschiedene Richtungen verkippte Wellenfronten gehen mit Wellennormalen als Ausbreitungsrichtungen einher, die nicht parallel zueinander sind. Diese Objektwellen beleuchten den Prüfling unter diskret verschiedenen Winkeln, bzw. aus diskret verschiedenen und damit nicht parallelen Richtungen. Das heißt, dass an jeder zu vermessenden Stelle des Prüflings eine oder mehrere Wellenfronten auftreffen, deren Propagationsrichtungen sich unterscheiden.

Das heißt, dass das Interferometer bei Belichtungen zu einem Zeitpunkt nicht nur durch eine Beleuchtungskonfiguration, bzw. eine Objektwelle mit einer zentralen Wellenlänge beleuchtet wird, sondern gleichzeitig durch beispielsweise drei oder vier Objektwellen unterschiedlicher Wellenlänge.

Jede der Laserlichtquellen wird so in den Aufbau integriert, dass ihr Licht den Prüfling unter anderen Winkeln als die anderen Laserlichtquellen beleuchtet. Damit ergeben sich Wellenfronten, wie sie in der Figur 3 dargestellt sind, und die zu Objektwellen mit verschiedenen Wellenlängen/Farben gehören. Als erwünschte Folge entstehen vor, bzw. auf dem Bildaufnehmer farbige, sich überlappende Interferogramm-Patches.

Der Bildaufnehmer K ist bevorzugt so gestaltet, dass er durch ortsaufgelöste Wellenlängenselektion die entstehenden Interferogramme ihrer Wellenlänge zuordnen kann. Damit können die störenden Überlappungen aufgelöst werden. Ein Beispiel eines solchen Bildaufnehmers wird von der Firma Sony hergestellt und unter der Bezeichnung "Polysens" beworben.

Hierzu ist es notwendig, dass die Beleuchtungswinkel der einzelnen Beleuchtungskonfigurationen so gewählt werden, dass keine benachbarten Interferogramm-Patches 18 dieselbe Farbe/Wellenlänge aufweisen, da ansonsten wieder störende Überlappbereiche mit derselben Wellenlänge entstehen würden.

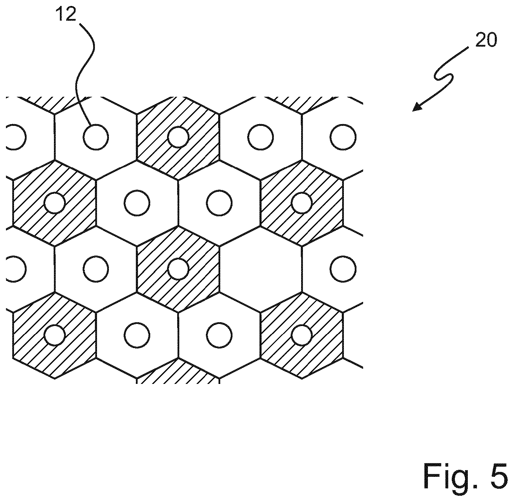

Figur 5 zeigt eine Draufsicht auf ein Punktlichtquellenarray 20 einer Ausgestaltung eines erfindungsgemäßen Interferometers. Das Punktlichtquellenarray 20 zeichnet sich dadurch aus, dass die Punktlichtquellen 12 so angeordnet sind, dass jede Punktlichtquelle 12 im Zentrum eines gedachten regelmäßigen Sechsecks angeordnet ist, wobei die Sechsecke in einer Ebene lückenlos aneinander angrenzen und wobei Sechsecke, in deren Zentrum eine Punktlichtquelle 12 angeordnet ist, die Licht mit einer zentralen Wellenlänge abgeben, nur an Sechsecke angrenzt, in deren Zentrum eine Licht einer anderen Wellenlänge abgebende Punklichtquelle angeordnet ist. Punktlichtquellen, die Licht gleicher Wellenlänge emittieren, werden durch gleiche Schraffuren ihrer zugeordneten Sechsecke repräsentiert. Dadurch gelingt es, die notwendige Anzahl an Beleuchtungskonfigurationen auf drei zu reduzieren.

Die verschiedenen Wellenlängen können in voneinander verschiedenen Bereichen eines Farbspektrums des sichtbaren Lichtes oder angrenzender Spektralbereiche (nahes Infrarot oder Ultraviolett) liegen, so dass die zentralen Wellenlängen Licht verschiedener Farbe darstellen. Dies gilt für sämtliche Ausführungsbeispiele und damit allgemein für das erfindungsgemäße Interferometer.

In dieser Anordnung, bei der die Punktlichtquellen auf einem zweidimensionalen Gitter mit hexagonaler Einheitszelle angeordnet sind, reichen drei Lichtquellen unterschiedlicher Wellenlänge, um die Bedingung der Nachbarn unterschiedlicher Farbe bei vollständiger Ausleuchtung des Prüflings einzuhalten. Bei der Verwendung von rotem (z.B. 630-690 nm), grünem (z.B. 532 nm) und blauem Licht (z.B. 440-460 nm) können alle drei Beleuchtungskonfigurationen in nur einer Bildaufnahme registriert werden, wenn als Bildaufnehmer K rgb-Farbkameras verwendet werden, beispielsweise Kameras mit Bayer-Filterarrays vor den Kamerapixeln. Das Punktlichtquellenarray 20 kann auch als Farbmosaik-Punktlichtquellenarray bezeichnet werden.

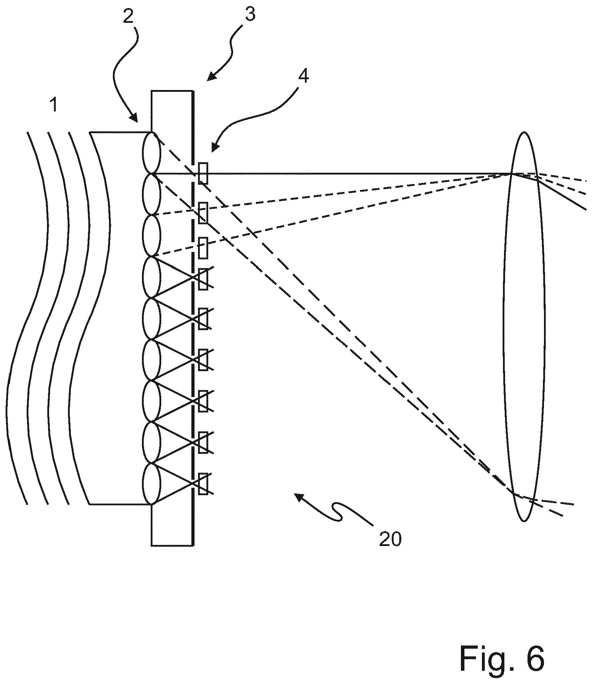

Figur 6 zeigt eine Seitenansicht eines Farbmosaik-Punktlichtquellenarrays 20. Das Farbmosaik-Punktlichtquellenarray erzeugt punktförmige Lichtquellen mit jeweils nur einer zentralen Wellenlänge. Diese werden von der Kollimationslinse 5 in zueinander verkippte, näherungsweise ebene Wellenfronten konvertiert. Das Farbmosaik-Punktlichtquellenarray besteht aus einem Mikrolinsenarray 2, das das einfallende Licht auf ein Blendenarray 3 fokussiert und einem optionalen Filterarray 4, das pro Mikrolinse nur Licht einer der n Wellenlängen passieren lässt. Pro Mikrolinse wird nur eine der n Wellenlängen ideal in die Blendenebene fokussiert. Im Rahmen der bevorzugten Ausgestaltungen ist n = drei oder vier. Für das in der Figur 5 dargestellte Farbmosaik-Punktlichtquellenarray ist n = 3. Entsprechend erzeugt das Farbmosaik-Punktlichtquellenarray aus n einfallenden Beleuchtungslichtwellenfronten unterschiedlicher Wellenlängen eine Vielzahl von Punktlichtquellen.

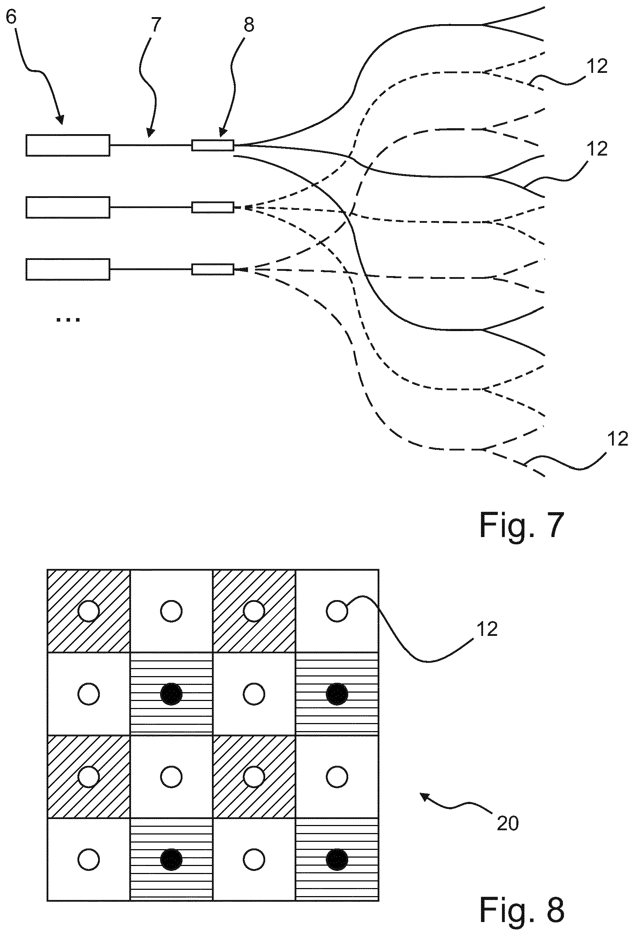

Alternativ zu dem mikrolinsenbasierten Farbmosaik-Punktlichtquellenarray 20 der Figur 5 kann auch ein Array aus Lichtleitfasern verwendet werden, das durch n = 3 oder 4 oder noch mehr Lichtquellen unterschiedlicher Wellenlänge gespeist wird. Figur 7 zeigt ein Punktlichtquellenarray auf Basis von Lichtleitfasern. Licht von n = 3 Lasern 6 verschiedener Wellenlängen wird in jeweils eine Lichtleitfaser 7 eingekoppelt, die an einem 1/m-Koppler 8 in m Fasern aufgeteilt wird. Die Lichtaustrittsenden der Fasern 6 bilden Punktlichtquellen und sind so angeordnet, wie es in den Figuren 5 und 8 dargestellt ist. Auch hier werden Punktlichtquellen, die Licht gleicher Wellenlänge emittieren, durch gleiche Symbole repräsentiert. Figur 7 zeigt damit eine Ausgestaltung, bei der die Vielzahl von Punktlichtquellen 12 für jede zentrale Wellenlänge eine Anordnung aus Lichtleitfaserenden aufweist, die mit einem optischen Koppler 8 an eine Licht der zentralen Wellenlänge emittierende Laserquelle 6 angekoppelt ist.

Alle Punktlichtquellen 12, die an einen der Laser 6 gekoppelt sind, bilden jeweils eine Beleuchtungskonfiguration. Die Bedingung, dass sich die Interferogramm-Patches nicht überlagern, kann durch die Anordnung gemäß der Figur 5 in Verbindung mit den drei Beleuchtungskonfigurationen dennoch eingehalten werden. Die parallele Aufnahme dieser drei Beleuchtungskonfigurationen in nur einer Aufnahme gelingt, indem die drei Beleuchtungskonfigurationen gleichzeitig aktiviert sind und den Prüfling damit gleichzeitig mit einer jeweils Beleuchtungskonfiguations-individuellen Wellenlänge (bzw. Farbkanal) beleuchten und die Bildaufnahme spektral gefiltert wird.

Damit können die überlagerten, aber farblich unterscheidbaren Interferogramm-Patches 18 auf dem Bildaufnehmer K wieder getrennt werden, beispielsweise durch lokale Farbfilter vor jedem Pixel.

Als vorteilhafte Folge können alle drei/vier/n Beleuchtungskonfigurationen in nur einer Bildaufnahme registriert werden.

Die Phasenauswertung kann traditionell über Phasenschieben stattfinden, was allerdings die Aufnahme von zum Beispiel fünf Einzelbildern erfordert, die in rascher Folge aufgenommen werden können, so dass eine typische Messzeit von etwa einer Sekunde realisiert werden kann.

Eine andere Realisierung nutzt die bisherige Beleuchtungsanordnung, bei der die Punktlichtquellen auf einem zweidimensionalen Gitter mit quadratischer Einheitszelle angeordnet sind. Diese erfordert aber vier Lichtquellen unterschiedlicher Wellenlänge (bzw. vier Farbkanäle). Die Auftrennung der Farb-Wellenlängenkanäle auf dem Bildaufnehmer kann auch in diesem Fall durch Filterarrays vor den Bildaufnehmerpixeln erfolgen. Die Filterarrays sind in diesem Fall so ausgelegt, dass von den Filtern pro Pixel hauptsächlich nur eine Wellenlänge transmittiert wird, während die anderen blockiert werden.

Figur 8 zeigt ein Farbmosaik-Punktlichtquellenarray bei dem die Punktlichtquellen so angeordnet sind, dass jede Lichtquelle im Zentrum eines gedachten regelmäßigen Quadrates angeordnet ist, wobei die Quadrate in einer Ebene lückenlos aneinander angrenzen und wobei Quadrate, in deren Zentrum eine Lichtquelle angeordnet ist, die Licht mit einer zentralen Wellenlänge (d.h. Licht eines Farbkanals) abgeben, nur an Quadrate angrenzt, in deren Zentrum eine Licht einer anderen Wellenlänge (d.h. Licht eines anderen Farbkanals) abgebende Lichtquelle angeordnet ist. Punktlichtquellen 12, die Licht gleicher Wellenlänge emittieren, werden durch gleiche Schraffuren ihrer zugeordneten Quadrate repräsentiert. Diese Ausgestaltung arbeitet entsprechend mit vier Beleuchtungskonfigurationen, bzw. Farbkanälen.

Jenseits der genannten regelmäßigen Anordnungen können die Beleuchtungskonfigurationen auch mit einer unregelmäßigen Anordnung von Punktlichtquellen verwendet werden, solange sichergestellt ist, dass keine zwei benachbarten Punktlichtquellen dieselbe Wellenlänge verwenden. Für manche Prüfkonfigurationen ist es vorteilhaft, die Punktlichtquellen so zu positionieren, dass sie nicht in einer ebenen Fläche liegen, sondern zum Beispiel auf einer gekrümmten Fläche oder auf einer Kegel-, Zylinder- oder Pyramidenfläche.

Eine Erfassung der Prüflingsform in nur einem Kamerabild wird mit der Erfindung wie folgt realisiert: Das vom Prüfling SUT reflektierte oder transmittierte Licht (Prüfwellen, bzw. vom Prüfling SUT reflektierte oder transmittierte Objektwellen) wird durch entsprechende Polarisatoren und Phasenverzögerungsplatten so eingestellt, dass zirkular polarisiertes Licht auf den Bildaufnehmer K fällt.

Die für die Interferenzen notwendige Referenzwellenfront wird so eingestellt, dass gegenläufig zirkular polarisiertes Licht auf den Bildaufnehmer K fällt. Durch Polarisatoren unterschiedlicher Orientierung vor den Pixeln des Bildaufnehmers K wird die relative Phase zwischen Objektwelle und Referenzwelle variiert, so dass mit üblichen Phasenschiebealgorithmen die zu messende Phase bestimmt werden kann.

Technisch kann die Erfindung sehr kompakt durch den Einsatz von seit einigen Monaten verfügbaren Farbsensoren von Sony realisiert werden, die neben den Farbfiltern zusätzlich Polarisationsfilter unterschiedlicher Orientierung auf den einzelnen Pixeln eines Bildaufnehmers aufweisen.

Alternativ können anstatt der polarisationsbasierten Auswertung der Phase auch trägerfrequenzbasierte Verfahren zur Auswertung der Phase eingesetzt werden (siehe [Mitsuo Takeda, Hideki Ina, and Seiji Kobayashi, "Fourier-transform method of fringe-pattern analysis for computer-based topography and interferometry," J. Opt. Soc. Am. 72, 156-160 (1982)]).

Die Erfindung ist nicht auf das bis hier als Anwendungsbeispiel beschriebene Interferometer beschränkt und kann zum Beispiel auch in Verbindung mit einem Tilted Wave Interferometer nach dem Fizeau-Typ, dem Michelson-Typ oder dem Mach-Zehnder-Typ verwendet werden.

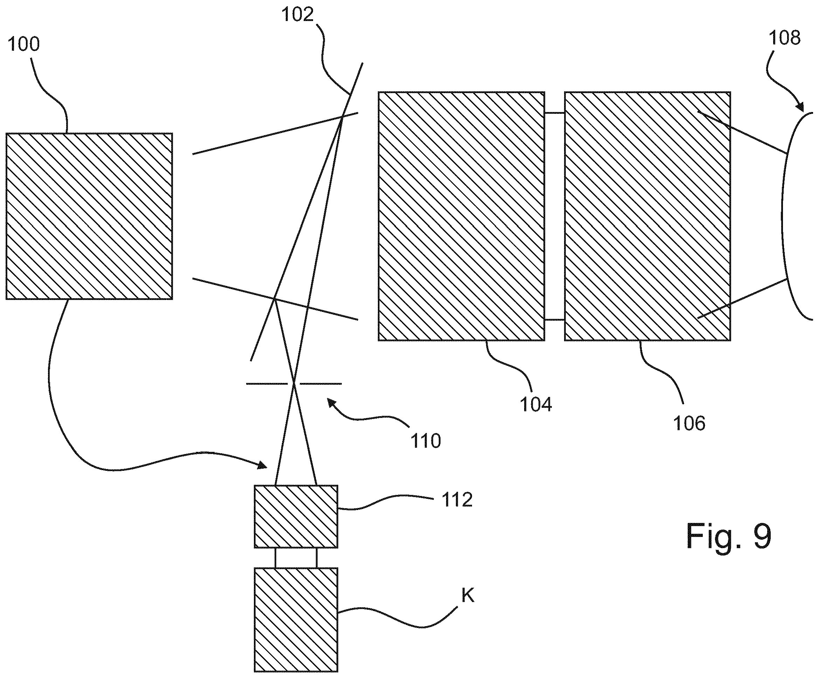

Figur 9 zeigt schematisch ein Twyman-Green Interferometer mit einer Beleuchtungseinheit 100, einem Strahlteiler 102, einer Kollimationslinse 104, einem Interferometerobjektiv 106, einer Prüflingsoberfläche 108, einer Interferometerblende 110, einer Abbildungslinse 112 und einem Bildaufnehmer K.

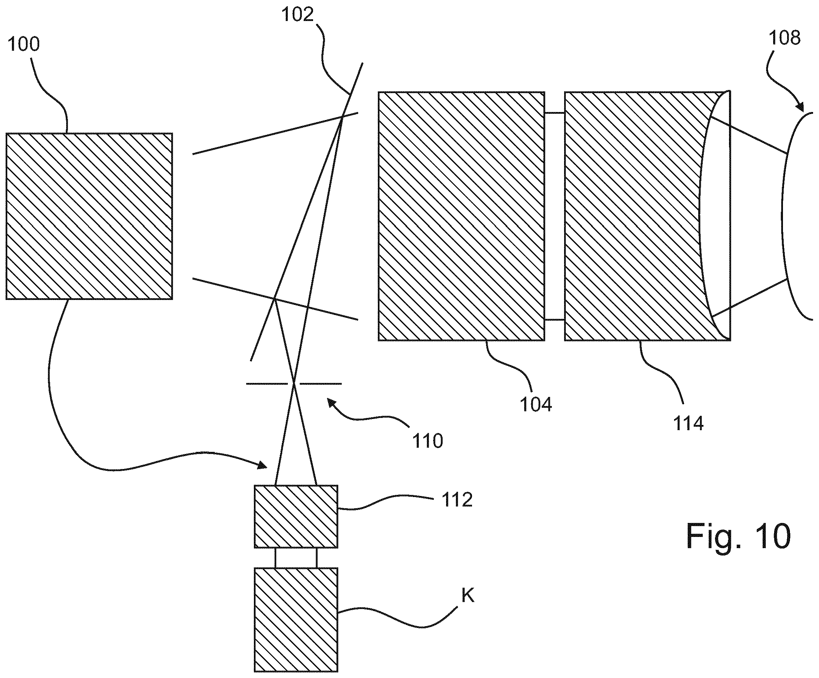

Figur 10 zeigt schematisch ein Fizeau-Tilted Wave Interferometer mit einer Beleuchtungseinheit 100, einem Strahlteiler 102, einer Kollimationslinse 104, einem Fizeau-Interferometerobjektiv 114, einer Prüflingsoberfläche 108, einer Interferometerblende 110, einer Abbildungslinse 112 und einem Bildaufnehmer K.

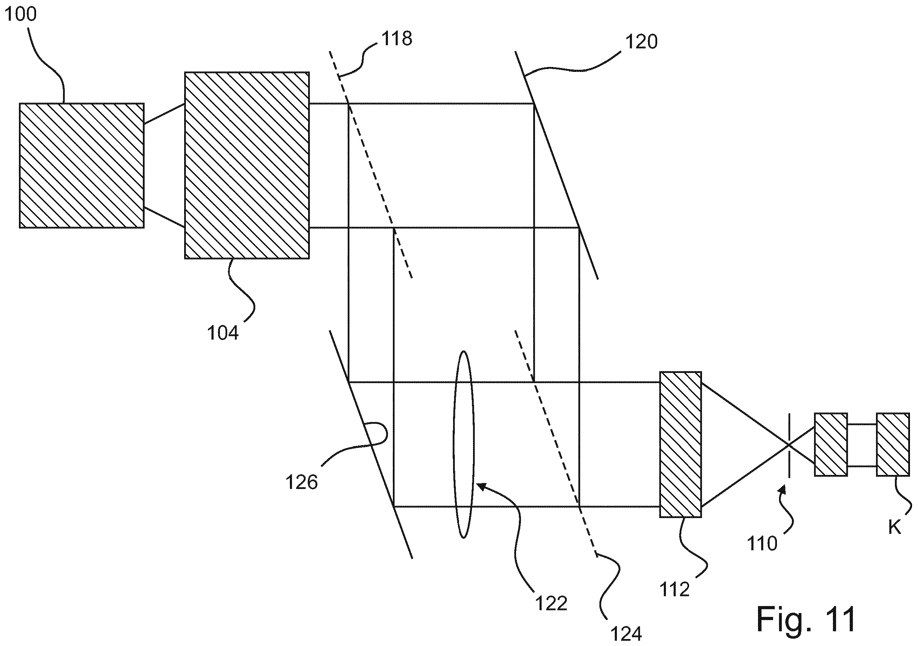

Die bis hier beschriebenen Interferometer werden mit an dem Prüfling reflektierten Licht betrieben. Figur 11 zeigt ein mit durch den Prüfling transmittierten Licht betriebenes Interferometer vom Mach-Zehnder Typ mit einer Beleuchtungseinheit 100, einer Kollimationslinse 104, einem ersten Strahlteiler 118, einem ersten Spiegel 120, einem Licht transmittierendem Prüfling 122, einem zweiten Strahlteiler 124, einer Abbildungslinse einer Interferometerblende und einem Bildaufnehmer sowie mit einem zweiten Spiegel 126 im Referenzstrahlengang.

Je nach Interferometertyp gelangt das Licht einer die benötigten Lichtwellen erzeugenden Beleuchtungseinheit 100 auf verschiedenen Wegen zum transmittierenden Prüfling 122, bzw. zu einer reflektierenden Prüflingsoberfläche 108. Die Beleuchtungseinheit 100 ist zum Beispiel ein Farbmosaik-Punktlichtquellenarray 20 wie es weiter oben beschrieben worden ist. Dort interagiert das Licht mit dem Prüfling 122/der Prüflingsoberfläche 108 und trägt dadurch die gesuchte Information. Beispielsweise kann ein Aufbau vom Twyman-Green-Typ oder Fizeau-Typ gewählt werden, wenn die Oberflächentopographie der Prüflingsoberfläche vermessen werden soll, oder es wird ein Aufbau vom Mach-Zehnder-Typ gewählt und der Prüfling in Transmission genutzt, wenn die zu messende Größe dessen optische Dicke ist. Nach Interaktion mit dem Prüfling gelangen die aus der Interaktion resultierenden Prüfwellenfronten verschiedener Wellenlängen zum Bildaufnehmer K, wo sie mit den jeweils kohärenten Referenzwellenfronten überlagert werden. Durch die Nutzung von Licht verschiedener Wellenlängen können alle Punktlichtquellen gleichzeitig während einer Belichtungszeit des Bildaufnehmers für zumindest einen Bruchteil der Belichtungszeit Licht emittieren. Da alle Punktlichtquellen gleichzeitig angeschaltet sind, entsteht die Messinformation über den gesamten Prüfling gleichzeitig in einem Bildaufnehmerbild.

Die spektrale Trennung der aus der Überlagerung auf dem Bildaufnehmer K resultierenden Interferogramme kann über verschiedene technische Umsetzungen realisiert werden. Neben den bereits oben genannten Filtermasken vor den Pixeln eines Bildaufnehmers können die Spektralkanäle durch separate Kameras/Bildaufnehmer für jede Farbe, bzw. zentrale Wellenlänge realisiert werden. In diesem Fall wird das Licht vom Prüfling durch Strahlteiler auf die verschiedenen Bildaufnehmer verteilt und entweder bereits an den Strahlteilern durch dichroitische Strahlteilerschichten spektral selektiert oder durch absorbierende Filter direkt vor den Bildaufnehmern spektral selektiert.

Die durch die Farbfilter getrennten Interferogrammpatches zeigen zunächst sinusförmige Intensitätsstreifen, aus denen bei der Phasenauswertung die Phasendifferenz und damit der Gangunterschied zwischen Referenz- und Objektwelle, aus dem die zu messenden Prüflingseigenschaften bestimmt werden, berechnet wird.

Die Phasenauswertung kann gemäß Stand der Technik mittels zeitlichem Phasenschieben stattfinden, also mittels einer Aufnahme einer Folge von Interferogrammen, bei der zwischen den Aufnahmen gezielt eine Veränderung der Phase zwischen Objekt- und Referenzwelle eingefügt wird, typischerweise durch die Verschiebung eines Spiegels im Strahlengang. Dies erfordert die Aufnahme von zum Beispiel fünf Einzelbildern, die in rascher Folge aufgenommen werden können, so dass eine typische Messzeit von etwa einer Sekunde realisiert werden kann.

Eine Erfassung der Prüflingsform in nur einem Bildaufnehmerbild wird mit der Erfindung wie folgt realisiert: Die spektral überlagerten Interferogramme der drei oder mehr Beleuchtungskonfigurationen werden bevorzugt über spektrale Selektion in Einzelinterferogramme aufgespalten, wobei jedes Einzelinterferogramm einer Beleuchtungskonfiguration entspricht. Diese Einzelinterferogramme werden jedes für sich mit Methoden der Einzelinterferogrammauswertung ausgewertet. Eine bevorzugte Ausführung der Einzelinterferogrammauswertung ist die Auswertung über Polarisationsverfahren (z.B. US 7 777 895, US 6 304 330, US 6 552 808, US 7230 717). Dabei wird das Licht vom Prüfling durch Polarisatoren und Phasenverzögerungsplatten so eingestellt, dass zirkular polarisiertes Licht auf den Bildaufnehmer fällt. Die für die Interferenzen notwendige Referenzwellenfront wird so eingestellt, dass gegenläufiges zirkular polarisiertes Licht auf den Bildaufnehmer fällt. Durch Polarisatoren unterschiedlicher Orientierung vor den Pixeln des Bildaufnehmers wird die relative Phase zwischen Objektwelle und Referenzwelle variiert, so dass mit üblichen Phasenschiebealgorithmen aus einer Gruppe von vier Pixeln die zu messende Phase bestimmt werden kann.

Technisch kann die Erfindung sehr kompakt durch den Einsatz der seit einigen Monaten verfügbaren Polarisationsbildsensoren "Polarsens" von Sony realisiert werden, die neben den Farbfiltern zusätzlich Polarisationsfilter mit vier unterschiedlichen Orientierungen auf den einzelnen Pixeln aufweisen, wobei die Polarisationsfilter zwischen einer Fotodiodenschicht und einer Linsenschicht des Bildaufnehmer-Chips angeordnet sind.

In einer weiteren bevorzugten Ausgestaltung wird die Phase der Einzelinterferogramme durch Trägerfrequenzverfahren bestimmt, siehe z.B. [Mitsuo Takeda, Hideki Ina, and Seiji Kobayashi, "Fourier-transform method of fringe-pattern analysis for computer-based topography and interferometry," J. Opt. Soc. Am. 72, 156-160 (1982)]. Hierbei werden die Objektwellen mit gegenüber den Objektwellen stark verkippten Referenzwellen überlagert. Die Phasenauswertung erfolgt dann durch Demodulationsverfahren aus den hochfrequenten Interferogrammstreifen.

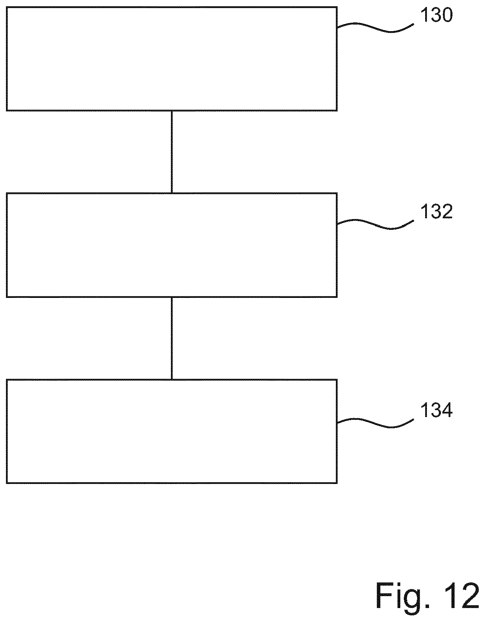

Figur 12 zeigt ein Flussdiagramm als Ausführungsbeispiel eines erfindungsgemäßen Verfahrens zur flächenhaften Vermessung einer Oberfläche oder optischen Dicke eines optisch glatten Prüflings.

In einem ersten Schritt 130 wird der optisch glatte Prüfling mit mehreren Objektwellen aus diskret verschiedenen Richtungen beleuchtet. Dabei weist eine erste der Objektwellen, die aus einer ersten Richtung einfällt, eine erste zentrale Wellenlänge auf. Eine zweite der Objektwellen, die in eine zweite der diskret verschiedenen Richtungen propagiert, weist eine zweite zentrale Wellenlänge auf, und eine dritte der Objektwellen, die in eine dritte der diskret verschiedenen Richtungen propagiert, weist eine dritte zentrale Wellenlänge auf. Die erste zentrale Wellenlänge ist von der zweiten zentralen Wellenlänge verschieden, und die dritte zentrale Wellenlänge ist von der ersten zentralen Wellenlänge und von der zweiten zentralen Wellenlänge verschieden. Der Prüfling wird gleichzeitig mit der ersten Objektwelle und der zweiten Objektwelle und der dritten Objektwelle beleuchtet. Nach einer Wechselwirkung mit dem Prüfling werden von diesem ausgehende Objektwellen in einem Schritt 132 auf dem Bildaufnehmer überlagert. In eine dritten Schritt 134 werden die durch die Überlagerung entstehenden Interferogramme spektral in wellenlängenindividuelle Teilinterferogramme zerlegt.

In einer bevorzugten Ausgestaltung ist das Interferometer 10 dazu eingerichtet, den optisch glatten Prüfling mit mehreren Beleuchtungskonfigurationen zu beleuchten, wobei sich jede Beleuchtungskonfiguration durch eine Vielzahl von Objektwellen ergibt, mit denen der Prüfling beleuchtet wird, und von dem Prüfling durch Reflektion an der zu vermessenden Oberfläche 108 oder durch Transmission durch den Prüfling 122 beeinflusste Objektwellen mit zu den Objektwellen kohärenten Referenzwellen auf wenigstens einem Bildaufnehmer K zu Interferogrammen zu überlagern. Dabei wird jede Beleuchtungskonfiguration durch einen eigenen Farbkanal, bzw. eine eigene zentrale Wellenlänge realisiert, wobei eine erste der Beleuchtungskonfigurationen nur Objektwellen 14.1, 14.2, 14.3 aufweist, die eine erste zentrale Wellenlänge aufweisen und wobei eine zweite der Beleuchtungskonfigurationen 14.1, 14.2, 14.3 nur Objektwellen aufweist, die eine zweite zentrale Wellenlänge aufweisen, wobei eine dritte der Beleuchtungskonfigurationen nur Objektwellen 14.1, 14.2, 14.3 aufweist, die eine dritte zentrale Wellenlänge aufweisen, wobei die erste zentrale Wellenlänge von der zweiten zentralen Wellenlänge verschieden ist, wobei die dritte zentrale Wellenlänge von der ersten zentralen Wellenlänge und von der zweiten zentralen Wellenlänge verschieden ist und wobei das Interferometer 10 dazu eingerichtet ist, den Prüfling 122 gleichzeitig mit Objektwellen der ersten Beleuchtungskonfiguration und der zweiten Beleuchtungskonfiguration und der dritten Beleuchtungskonfiguration aus diskret verschiedenen Richtungen zu beleuchten und nach einer Wechselwirkung mit dem Prüfling 122 von diesem ausgehende Objektwellen auf dem Bildaufnehmer K zu überlagern und wobei der Bildaufnehmer K dazu eingerichtet ist, die durch die Überlagerung entstehenden Interferogramme spektral in wellenlängenindividuelle Teilinterferogramme zu zerlegen.

Bevorzugt ist auch, dass eine vierte der Beleuchtungskonfigurationen nur Objektwellen aufweist, die eine vierte zentrale Wellenlänge aufweisen und dass die vierte zentrale Wellenlänge von der ersten zentralen Wellenlänge und von der zweiten zentralen Wellenlänge und von der dritten zentralen Wellenlänge verschieden ist.

Weiter ist bevorzugt, dass Objektwellen, die in zueinander nächstbenachbarten Richtungen propagieren, nicht dieselbe zentrale Wellenlänge aufweisen.

Eine weitere bevorzugte Ausgestaltung zeichnet sich dadurch aus, dass der Bildaufnehmer K dazu eingerichtet ist, Interferogramme durch Farbfilter so zu trennen, dass jedes Pixel des Bildaufnehmers K nur die Interferogramminformation von nur einer Wellenlänge detektiert.

Bevorzugt ist auch, dass das Interferometer eine Vielzahl von Punktlichtquellen 12 aufweist, von denen die Objektwellen einer Beleuchtungskonfiguration gleichzeitig ausgehen.

Weiter ist bevorzugt, dass die Punktlichtquellen 12 so angeordnet sind, dass jede Punktlichtquelle 12 im Zentrum eines gedachten regelmäßigen Sechsecks angeordnet ist, wobei die Sechsecke in einer Ebene lückenlos aneinander angrenzen und dass Sechsecke, in deren Zentrum eine Punktlichtquelle 12 angeordnet ist, die Licht mit einer zentralen Wellenlänge abgeben, nur an Sechsecke angrenzt, in deren Zentrum eine Licht einer anderen Wellenlänge abgebende Punktlichtquelle 12 angeordnet ist.

Eine weitere bevorzugte Ausgestaltung zeichnet sich dadurch aus, dass die Punktlichtquellen 12 so angeordnet sind, dass jede Punktlichtquelle 12 im Zentrum eines gedachten regelmäßigen Quadrates angeordnet ist, wobei die Quadrate in einer Ebene lückenlos aneinander angrenzen und wobei Quadrate, in deren Zentrum eine Punktlichtquelle 12 angeordnet ist, die Licht mit einer zentralen Wellenlänge abgibt, nur an Quadrate angrenzt, in deren Zentrum eine Licht einer anderen Wellenlänge abgebenden Punktlichtquelle 12 angeordnet ist.

Bevorzugt ist auch, dass der Bildaufnehmer K auf seinen einzelnen Pixeln neben Farbfiltern zusätzlich Polarisationsfilter mit pixelweise unterschiedlichen Orientierungen aufweist.

Weiter ist bevorzugt, dass die Vielzahl von Punktlichtquellen 12 für jede zentrale Wellenlänge eine Anordnung einer kohärenten Laserquelle L, eines Kepler-Fernrohrs und eines Punktlichtquellenarrays PLQA ist, das aus einem transparenten Substrat besteht, auf dessen dem Fernrohr zugewandter Lichteintrittsseite sich Mikrolinsen befinden, deren Fokus in der Ebene einer Lichtaustrittsseite des Substrates liegt, wo sich ein Blendenarray AA befindet, von dem Objektwellen mit einer zentralen Wellenlänge ausgehen.

Eine weitere bevorzugte Ausgestaltung zeichnet sich dadurch aus, dass Interferometer nach einem der Ansprüche 1 bis 8, dadurch gekennzeichnet, dass die Vielzahl von Punktlichtquellen 12 für jede zentrale Wellenlänge eine Anordnung aus Lichtleitfaserenden aufweist, die mit einem oder mehreren optischen Kopplern 8 an eine Licht der zentralen Wellenlänge emittierende Laserquelle 6 angekoppelt ist.

Bei einer bevorzugten Ausgestaltung des Verfahrens wird der optisch glatte Prüfling 122 mit mehreren Beleuchtungskonfigurationen 14.1, 14.2, 14.3 beleuchtet, wobei sich jede Beleuchtungskonfiguration durch eine Vielzahl von Objektwellen ergibt, mit denen der Prüfling beleuchtet wird. Von dem Prüfling 122 durch Reflektion an der zu vermessenden Oberfläche 108 oder durch Transmission durch den Prüfling 122 beeinflusste Objektwellen mit zu den Objektwellen kohärenten Referenzwellen werden auf wenigstens einem Bildaufnehmer K zu Interferogrammen überlagert. Jede Beleuchtungskonfiguration wird durch einen eigenen Farbkanal, bzw. eine eigene zentrale Wellenlänge realisiert, wobei eine erste der Beleuchtungskonfigurationen nur Objektwellen 14.1, 14.2, 14.3 aufweist, die eine erste zentrale Wellenlänge aufweisen und wobei eine zweite der Beleuchtungskonfigurationen nur Objektwellen 14.1, 14.2, 14.3 aufweist, die eine zweite zentrale Wellenlänge aufweisen, wobei eine dritte der Beleuchtungskonfigurationen nur Objektwellen 14.1, 14.2, 14.3 aufweist, die eine dritte zentrale Wellenlänge aufweisen, wobei die erste zentrale Wellenlänge von der zweiten zentralen Wellenlänge verschieden ist, wobei die dritte zentrale Wellenlänge von der ersten zentralen Wellenlänge und von der zweiten zentralen Wellenlänge verschieden ist und wobei der Prüfling (122) gleichzeitig mit Objektwellen der ersten Beleuchtungskonfiguration und der zweiten Beleuchtungskonfiguration und der dritten Beleuchtungskonfiguration aus diskret verschiedenen Richtungen beleuchtet wird und nach einer Wechselwirkung mit dem Prüfling 122 von diesem ausgehende Objektwellen auf dem Bildaufnehmer K überlagert werden und wobei die durch die Überlagerung entstehenden Interferogramme spektral in wellenlängenindividuelle Teilinterferogramme zerlegt werden.

## Patentansprüche

1. Interferometer (10) zur flächenhaften Vermessung einer Oberfläche (108) oder optischen Dicke eines optisch glatten Prüflings (122), wobei das Interferometer (10) dazu eingerichtet ist, den optisch glatten Prüfling mit mehreren Beleuchtungskonfigurationen zu beleuchten, wobei sich jede Beleuchtungskonfiguration durch eine Vielzahl von Objektwellen (14.1, 14.2, 14.3) ergibt, mit denen der Prüfling beleuchtet wird, und von dem Prüfling durch Reflektion an der zu vermessenden Oberfläche (108) oder durch Transmission durch den Prüfling (122) beeinflusste Objektwellen mit zu den Objektwellen (14.1, 14.2, 14.3) kohärenten Referenzwellen auf wenigstens einem Bildaufnehmer (K) zu Interferogrammen zu überlagern, **dadurch gekennzeichnet, dass** jede Beleuchtungskonfiguration durch Objektwellen mit Wellenlängen aus einem zusammenhängenden Wellenlängenbereich, der eine wellenlängenbereichsindividuelle zentrale Wellenlänge aufweist, realisiert wird, wobei eine erste der Beleuchtungskonfigurationen nur Objektwellen (14.1, 14.2, 14.3) aus einem Wellenlängenbereich aufweist, der eine erste zentrale Wellenlänge aufweist und wobei eine zweite der Beleuchtungskonfigurationen (14.1, 14.2, 14.3) nur Objektwellen aus einem Wellenlängenbereich aufweist, der eine zweite zentrale Wellenlänge aufweist, wobei eine dritte der Beleuchtungskonfigurationen nur Objektwellen (14.1, 14.2, 14.3) aus einem Wellenlängenbereich aufweist, der eine dritte zentrale Wellenlänge aufweist, wobei die erste zentrale Wellenlänge von der zweiten zentralen Wellenlänge verschieden ist, wobei die dritte zentrale Wellenlänge von der ersten zentralen Wellenlänge und von der zweiten zentralen Wellenlänge verschieden ist, wobei Objektwellen, die in zueinander nächstbenachbarte Richtungen propagieren, nicht Wellenlängen aus demselben Wellenlängenbereich aufweisen und wobei das Interferometer (10) dazu eingerichtet ist, den Prüfling (122) gleichzeitig mit Objektwellen der ersten Beleuchtungskonfiguration und der zweiten Beleuchtungskonfiguration und der dritten Beleuchtungskonfiguration aus diskret verschiedenen Richtungen zu beleuchten und nach einer Wechselwirkung mit dem Prüfling (122) von diesem ausgehende Objektwellen auf dem Bildaufnehmer (K) zu überlagern und wobei der Bildaufnehmer (K) dazu eingerichtet ist, die durch die Überlagerung entstehenden Interferogramme spektral in wellenlängenindividuelle Teilinterferogramme zu zerlegen.

2. Interferometer (10) nach Anspruch 1, **dadurch gekennzeichnet, dass** eine vierte der Beleuchtungskonfigurationen nur Objektwellen aus einem Wellenlängenbereich aufweist, der eine vierte zentrale Wellenlänge aufweist, wobei die vierte zentrale Wellenlänge von der ersten zentralen Wellenlänge, der zweiten zentralen Wellenlänge und der dritten zentralen Wellenlänge verschieden ist, und wobei das Interferometer dazu eingerichtet ist, den Prüfling gleichzeitig mit Objektwellen der ersten Beleuchtungskonfiguration und der zweiten Beleuchtungskonfiguration und der dritten Beleuchtungskonfiguration und der vierten Beleuchtungskonfiguration aus diskret verschiedenen Richtungen zu beleuchten und nach einer Wechselwirkung mit dem Prüfling von diesem ausgehende Objektwellen auf dem Bildaufnehmer zu überlagern und wobei der Bildaufnehmer dazu eingerichtet ist, die durch die Überlagerung entstehenden Interferogramme spektral in wellenlängenindividuelle Teilinterferogramme zu zerlegen.

3. Interferometer nach einem der vorhergehenden Ansprüche, **dadurch gekennzeichnet, dass** das Interferometer eine Vielzahl von Punktlichtquellen aufweist, von denen die Objektwellen einer Beleuchtungskonfiguration gleichzeitig ausgehen.

4. Interferometer (10) nach einem der vorhergehenden Ansprüche, **dadurch gekennzeichnet, dass** der Bildaufnehmer (K) dazu eingerichtet ist, Interferogramme durch Farbfilter so zu trennen, dass jedes Pixel des Bildaufnehmers (K) nur die Interferogramminformation von nur einem Wellenlängenbereich detektiert.

5. Interferometer (10) nach Anspruch 3 und wenigstens einem weiteren der vorhergehenden Ansprüche, **dadurch gekennzeichnet, dass** die Punktlichtquellen (12) so angeordnet sind, dass jede Punktlichtquelle (12) im Zentrum eines gedachten regelmäßigen Sechsecks angeordnet ist, wobei die Sechsecke in einer Ebene lückenlos aneinander angrenzen und dass Sechsecke, in deren Zentrum eine Punktlichtquelle (12) angeordnet ist, die Licht mit Wellenlängen aus einem der Wellenlängenbereiche mit einer zentralen Wellenlänge abgibt, nur an Sechsecke angrenzt, in deren Zentrum eine Licht einer Wellenlängen aus einem anderen der Wellenlängenbereiche abgebende Punktlichtquelle (12) angeordnet ist.

6. Interferometer (10) nach Anspruch 3, **dadurch gekennzeichnet, dass** die Punktlichtquellen (12) so angeordnet sind, dass jede Punktlichtquelle (12) im Zentrum eines gedachten regelmäßigen Quadrates angeordnet ist, wobei die Quadrate in einer Ebene lückenlos aneinander angrenzen und wobei Quadrate, in deren Zentrum eine Punktlichtquelle (12) angeordnet ist, die Licht mit Wellenlängen aus einem der Wellenlängenbereiche mit einer zentralen Wellenlänge abgibt, nur an Quadrate angrenzt, in deren Zentrum eine Licht einer Wellenlänge aus einem anderen der Wellenlängenbereiche abgebende Punktlichtquelle (12) angeordnet ist.

7. Interferometer (10) nach Anspruch 4, **dadurch gekennzeichnet, dass** der Bildaufnehmer (K) auf seinen einzelnen Pixeln neben Farbfiltern zusätzlich Polarisationsfilter mit pixelweise unterschiedlichen Orientierungen aufweist.

8. Interferometer (10) nach Anspruch 3 und wenigstens einem weiteren der vorhergehenden Ansprüche, **dadurch gekennzeichnet, dass** die Vielzahl von Punktlichtquellen (12) für jeden der Wellenlängenbereiche eine Anordnung einer kohärenten Laserquelle (L), eines Kepler-Fernrohrs und eines Punktlichtquellenarrays (PLQA) ist, das aus einem transparenten Substrat besteht, auf dessen dem Fernrohr zugewandter Lichteintrittsseite sich Mikrolinsen befinden, deren Fokus in der Ebene einer Lichtaustrittsseite des Substrates liegt, wo sich ein Blendenarray (AA) befindet, von dem Objektwellen aus einem der Wellenlängenbereiche ausgehen.

9. Interferometer nach Anspruch 3 und wenigstens einem weiteren der Ansprüche 1 bis 8, **dadurch gekennzeichnet, dass** die Vielzahl von Punktlichtquellen (12) für jeden der Wellenlängenbereiche eine Anordnung aus Lichtleitfaserenden aufweist, die mit einem oder mehreren optischen Kopplern (8) an eine Licht der zentralen Wellenlänge emittierende Laserquelle (6) angekoppelt ist.

10. Verfahren zur flächenhaften Vermessung einer Oberfläche (108) oder optischen Dicke eines optisch glatten Prüflings (122), wobei der optisch glatte Prüfling (122) mit mehreren Beleuchtungskonfigurationen (14.1, 14.2, 14.3) beleuchtet wird, wobei sich jede Beleuchtungskonfiguration durch eine Vielzahl von Objektwellen ergibt, mit denen der Prüfling beleuchtet wird und die von der Vielzahl von Punktlichtquellen (12) ausgehen, und wobei von dem Prüfling (122) durch Reflektion an der zu vermessenden Oberfläche (108) oder durch Transmission durch den Prüfling (122) beeinflusste Objektwellen mit zu den Objektwellen kohärenten Referenzwellen auf wenigstens einem Bildaufnehmer (K) zu Interferogrammen überlagert werden, **dadurch gekennzeichnet, dass** jede Beleuchtungskonfiguration durch Objektwellen mit Wellenlängen aus einem zusammenhängenden Wellenlängenbereich, der eine wellenlängenbereichsindividuelle zentrale Wellenlänge aufweist, realisiert wird, wobei eine erste der Beleuchtungskonfigurationen nur Objektwellen (14.1, 14.2, 14.3) aus einem Wellenlängenbereich aufweist, der eine erste zentrale Wellenlänge aufweist und wobei eine zweite der Beleuchtungskonfigurationen nur Objektwellen (14.1, 14.2, 14.3) aus einem Wellenlängenbereich aufweist, der eine zweite zentrale Wellenlänge aufweist, wobei eine dritte der Beleuchtungskonfigurationen nur Objektwellen (14.1, 14.2, 14.3) aus einem Wellenlängenbereich aufweist, der eine dritte zentrale Wellenlänge aufweist, wobei die erste zentrale Wellenlänge von der zweiten zentralen Wellenlänge verschieden ist, wobei die dritte zentrale Wellenlänge von der ersten zentralen Wellenlänge und von der zweiten zentralen Wellenlänge verschieden ist, wobei Objektwellen, die von zwei zueinander nächstbenachbarten Punktlichtquellen ausgehen, nicht Wellenlängen aus demselben Wellenlängenbereich aufweisen und wobei der Prüfling (122) gleichzeitig mit Objektwellen der ersten Beleuchtungskonfiguration und der zweiten Beleuchtungskonfiguration und der dritten Beleuchtungskonfiguration aus diskret verschiedenen Richtungen beleuchtet wird und nach einer Wechselwirkung mit dem Prüfling (122) von diesem ausgehende Objektwellen auf dem Bildaufnehmer (K) überlagert werden und wobei die durch die Überlagerung entstehenden Interferogramme spektral in wellenlängenindividuelle Teilinterferogramme zerlegt werden.

## Claims

1. Interferometer (10) for the measurement of a surface (108) or an optical thickness of an optically smooth test object (122), the interferometer (10) being configured to illuminate the optically smooth test object with a plurality of illumination configurations, each illumination configuration being produced by a plurality of object waves (14.1, 14.2, 14.3) with which the test object is illuminated, and to superimpose object waves influenced by the test object by means of reflection on the surface (108) to be measured or by means of transmission through the test object (122) onto reference waves coherent with the object waves (14.1, 14.2, 14.3) on at least one image capture device (K), to produce interferograms, **characterized in that** each illumination configuration is realized by object waves having wavelengths of a continuous wavelength region which has a central wavelength that is specific to the wavelength region, a first of the illumination configurations having only object waves (14.1, 14.2, 14.3) of a wavelength region having a first central wavelength, and wherein a second of the illumination configurations (14.1, 14.2, 14.3) has only object waves of a wavelength region which has a second central wavelength, and a third of the illumination configurations having only object waves (14.1, 14.2, 14.3) of a wavelength region which has a third central wavelength, the first central wavelength being different from the second central wavelength, the third central wavelength being different from the first central wavelength and from the second central wavelength, object waves which propagate in closely adjacent directions not containing wavelengths of the same wavelength region, and the interferometer (10) being configured to illuminate the test object (122) simultaneously with object waves of the first illumination configuration and the second illumination configuration and the third illumination configuration from discretely different directions, and, following an interaction with the test object (122), to superimpose object waves returning therefrom on the image capture device (K), and the image capture device (K) being configured to spectrally decompose the interferograms produced by the superposition into wavelength-specific partial interferograms.

2. Interferometer (10) according to claim 1, **characterized in that** a fourth of the illumination configurations has only object waves of a wavelength region which has a fourth central wavelength, the fourth central wavelength being different from the first central wavelength, the second central wavelength and the third central wavelength, and the interferometer being configured to illuminate the test object simultaneously with object waves of the first illumination configuration and the second illumination configuration and the third illumination configuration and the fourth illumination configuration from discretely different directions and, following an interaction with the test object, to superimpose object waves returning therefrom on the image capture device, and the image capture device being configured to spectrally decompose the interferograms produced by the superposition into wavelength-specific partial interferograms.

3. Interferometer according to any of the preceding claims, **characterized in that** the interferometer has a plurality of point light sources from which the object waves of an illumination configuration are emitted simultaneously.

4. Interferometer (10) according to any of the preceding claims, **characterized in that** the image capture device (K) is configured to separate interferograms using color filters, such that each pixel of the image capture device (K) detects only the interferogram information of only one wavelength region.

5. Interferometer (10) according to claim 3 and at least one other of the preceding claims, **characterized in that** the point light sources (12) are arranged such that each point light source (12) is arranged in the center of an imaginary regular hexagon, the hexagons being adjacent to each other without gaps in one plane, and such that hexagons, in the center of which a point light source (12) is arranged which emits light with wavelengths of one of the wavelength regions with a central wavelength, is only adjacent to hexagons in the center of which a point light source (12) which emits light of a wavelength of another of the wavelength regions.

6. Interferometer (10) according to claim 3, **characterized in that** the point light sources (12) are arranged such that each point light source (12) is arranged in the center of an imaginary regular square, the squares being adjacent to one another without gaps in one plane, and squares, in the center of which a point light source (12) is arranged which emits light with wavelengths of one of the wavelength regions which has a central wavelength, is only adjacent to squares in the center of which a point light source (12) is arranged which emits light of a wavelength of another of the wavelength regions.

7. Interferometer (10) according to claim 4, **characterized in that** the image capture device (K), in addition to color filters, additionally has polarization filters on its individual pixels, with pixel-wise different orientations.

8. Interferometer (10) according to claim 3 and at least one other of the preceding claims, **characterized in that** the plurality of point light sources (12) for each of the wavelength regions is an arrangement of a coherent laser source (L), a Keplerian telescope, and a point light source array (PLQA) which consists of a transparent substrate, there being micro-lenses on the light entry side thereof facing the telescope, and the focal point thereof is in the plane of a light exit side of the substrate, where an aperture array (AA) is located, from which the object waves of one of the wavelength regions are emitted.

9. Interferometer according to claim 3 and at least one other of claims 1 to 8, **characterized in that** the plurality of point light sources (12) for each of the wavelength regions has an arrangement of optical fiber ends coupled by means of one or more optical couplers (8) to a laser source (6) emitting light of the central wavelength.

10. Method for the measurement of a surface (108) or an optical thickness of an optically smooth test object (122), the optically smooth test object (122) being illuminated with a plurality of illumination configurations (14.1, 14.2, 14.3), each illumination configuration being made up of a plurality of object waves with which the test object is illuminated and which are emitted by the plurality of point light sources (12), and object waves influenced by the test object (122) by means of reflection on the surface (108) to be measured or by means of transmission through the test object (122) being superimposed onto reference waves coherent with the object waves on at least one image capture device (K), to produce interferograms, **characterized in that** each illumination configuration is realized by means of object waves with wavelengths of a continuous wavelength region which has a central wavelength that is specific to the wavelength region, a first of the illumination configurations having only object waves (14.1, 14.2, 14.3) of a wavelength region which has a first central wavelength, and a second of the illumination configurations having only object waves (14.1, 14.2, 14.3) of a wavelength region which has a second central wavelength, a third of the illumination configurations having only object waves (14.1, 14.2, 14.3) of a wavelength region which has a third central wavelength, the first central wavelength being different from the second central wavelength, the third central wavelength being different from the first central wavelength and from the second central wavelength, object waves which are emitted by two closely adjacent point light sources not containing wavelengths of the same wavelength region, and the test object (122) being simultaneously illuminated with object waves of the first illumination configuration and the second illumination configuration and the third illumination configuration from discretely different directions, and, following an interaction with the test object (122), object waves returning therefrom are superimposed on the image capture device (K), and the interferograms produced by the superposition being spectrally decomposed into wavelength-specific partial interferograms.

## Revendications

1. Interféromètre (10) pour la mesure de surface d'une surface (108) ou d'une épaisseur optique d'un échantillon (122) optiquement lisse, dans lequel l'interféromètre (10) est configuré pour éclairer l'échantillon optiquement lisse avec plusieurs configurations d'éclairage, dans lequel chaque configuration d'éclairage est obtenue par une pluralité d'ondes d'objet (14.1, 14.2, 14.3) avec lesquelles l'échantillon est éclairé, et pour superposer des ondes d'objet influencées par l'échantillon par réflexion sur la surface (108) à mesurer ou par transmission au moyen de l'échantillon (122) avec des ondes de référence cohérentes avec les ondes d'objet (14.1, 14.2, 14.3) sur au moins un capteur d'image (K) pour former des interférogrammes, **caractérisé en ce que** chaque configuration d'éclairage est réalisée par des ondes d'objet comportant des longueurs d'onde d'une plage de longueurs d'onde cohérente qui présente une longueur d'onde centrale individuelle à la plage de longueurs d'onde, dans lequel une première des configurations d'éclairage ne présente que des ondes d'objet (14.1, 14.2, 14.3) d'une plage de longueurs d'onde qui présente une première longueur d'onde centrale et dans lequel une deuxième des configurations d'éclairage (14.1, 14.2, 14.3) ne présente que des ondes d'objet d'une plage de longueurs d'onde qui présente une deuxième longueur d'onde centrale, dans lequel une troisième des configurations d'éclairage ne présente que des ondes d'objet (14.1, 14.2, 14.3) d'une plage de longueurs d'onde qui présente une troisième longueur d'onde centrale, dans lequel la première longueur d'onde centrale est différente de la deuxième longueur d'onde centrale, dans lequel la troisième longueur d'onde centrale est différente de la première longueur d'onde centrale et de la deuxième longueur d'onde centrale, dans lequel des ondes d'objet qui se propagent dans des directions les plus proches les unes des autres ne présentent pas de longueurs d'onde de la même plage de longueurs d'onde et dans lequel l'interféromètre (10) est configuré pour éclairer l'échantillon (122) simultanément avec des ondes d'objet de la première configuration d'éclairage et de la deuxième configuration d'éclairage et de la troisième configuration d'éclairage provenant de directions discrètement différentes et, après une interaction avec l'échantillon (122), pour superposer sur le capteur d'image (K) des ondes d'objet émises par ledit échantillon et dans lequel le capteur d'image (K) est configuré pour décomposer spectralement les interférogrammes résultant de la superposition en interférogrammes partiels individuels en longueur d'onde.

2. Interféromètre (10) selon la revendication 1, **caractérisé en ce qu'**une quatrième des configurations d'éclairage présente uniquement des ondes d'objet d'une plage de longueurs d'onde présentant une quatrième longueur d'onde centrale, dans lequel la quatrième longueur d'onde centrale est différente de la première longueur d'onde centrale, de la deuxième longueur d'onde centrale et de la troisième longueur d'onde centrale, et dans lequel l'interféromètre est configuré pour éclairer l'échantillon simultanément avec des ondes d'objet de la première configuration d'éclairage et de la deuxième configuration d'éclairage et de la troisième configuration d'éclairage et de la quatrième configuration d'éclairage provenant de directions discrètement différentes et, après une interaction avec l'échantillon, pour superposer sur le capteur d'image des ondes d'objet émises par ledit échantillon et dans lequel le capteur d'image est configuré pour décomposer spectralement les interférogrammes résultant de la superposition en interférogrammes partiels individuels en longueur d'onde.

3. Interféromètre selon l'une des revendications précédentes, **caractérisé en ce que** l'interféromètre présente une pluralité de sources lumineuses ponctuelles à partir desquelles les ondes d'objet d'une configuration d'éclairage sont émises simultanément.

4. Interféromètre (10) selon l'une des revendications précédentes, **caractérisé en ce que** le capteur d'image (K) est configuré pour séparer les interférogrammes par des filtres de couleur de sorte que chaque pixel du capteur d'image (K) ne détecte que les informations d'interférogramme d'une seule plage de longueurs d'onde.

5. Interféromètre (10) selon la revendication 3 et au moins une autre des revendications précédentes, **caractérisé en ce que** les sources lumineuses ponctuelles (12) sont disposées de sorte que chaque source lumineuse ponctuelle (12) est disposée au centre d'un hexagone régulier imaginaire, dans lequel les hexagones sont adjacents les uns aux autres sans espace dans un plan et **en ce que** des hexagones, au centre desquels est disposée une source de lumière ponctuelle (12) qui émet de la lumière comportant des longueurs d'onde provenant de l'une des plages de longueurs d'onde comportant une longueur d'onde centrale, ne sont adjacents qu'à des hexagones au centre desquels est disposée une source de lumière ponctuelle (12) émettant de la lumière de longueurs d'onde provenant d'une autre des plages de longueurs d'onde.

6. Interféromètre (10) selon la revendication 3, **caractérisé en ce que** les sources lumineuses ponctuelles (12) sont disposées de sorte que chaque source lumineuse ponctuelle (12) est disposée au centre d'un carré régulier imaginaire, dans lequel les carrés sont contigus les uns aux autres sans espace dans un plan et dans lequel des carrés, au centre desquels est disposée une source de lumière ponctuelle (12) qui émet de la lumière comportant des longueurs d'onde provenant de l'une des plages de longueurs d'onde comportant une longueur d'onde centrale, ne sont adjacents qu'à des carrés au centre desquels est disposée une source de lumière ponctuelle (12) émettant de la lumière d'une longueur d'onde provenant d'une autre des plages de longueurs d'onde.

7. Interféromètre (10) selon la revendication 4, **caractérisé en ce que** le capteur d'image (K) présente sur ses différents pixels, outre des filtres de couleur, des filtres de polarisation supplémentaires comportant des orientations différentes en termes de pixels.

8. Interféromètre (10) selon la revendication 3 et au moins une autre des revendications précédentes, **caractérisé en ce que** la pluralité de sources lumineuses ponctuelles (12) pour chacune des plages de longueurs d'onde est un agencement d'une source laser cohérente (L), d'une lunette de Kepler et d'un réseau de sources lumineuses ponctuelles (PLQA) qui est constitué d'un substrat transparent sur le côté d'entrée de lumière tourné vers la lunette duquel se trouvent des microlentilles dont le foyer se trouve dans le plan d'un côté de sortie de lumière du substrat, où se trouve un réseau de diaphragmes (AA) desquels sont émises des ondes d'objet de l'une des plages de longueurs d'onde.

9. Interféromètre selon la revendication 3 et au moins une autre des revendications 1 à 8, **caractérisé en ce que** la pluralité de sources lumineuses ponctuelles (12) présente, pour chacune des plages de longueurs d'onde, un agencement d'extrémités de fibres optiques couplées à une source laser (6) émettant de la lumière de la longueur d'onde centrale au moyen d'un ou de plusieurs coupleurs optiques (8).

10. Procédé pour la mesure de surface d'une surface (108) ou d'une épaisseur optique d'un échantillon (122) optiquement lisse, dans lequel l'échantillon (122) optiquement lisse est éclairé avec plusieurs configurations d'éclairage (14.1, 14.2, 14.3), dans lequel chaque configuration d'éclairage est obtenue par une pluralité d'ondes d'objet avec lesquelles l'échantillon est éclairé et qui sont émises à partir de la pluralité de sources lumineuses ponctuelles (12), et dans lequel des ondes d'objet influencées par l'échantillon (122) par réflexion sur la surface (108) à mesurer ou par transmission au moyen de l'échantillon (122) sont superposées avec des ondes de référence cohérentes avec les ondes d'objet sur au moins un capteur d'image (K) pour former des interférogrammes, **caractérisé en ce que** chaque configuration d'éclairage est réalisée par des ondes d'objet comportant des longueurs d'onde d'une plage de longueurs d'onde cohérente qui présente une longueur d'onde centrale individuelle à la plage de longueurs d'onde, dans lequel une première des configurations d'éclairage ne présente que des ondes d'objet (14.1, 14.2, 14.3) d'une plage de longueurs d'onde qui présente une première longueur d'onde centrale et dans lequel une deuxième des configurations d'éclairage (14.1, 14.2, 14.3) ne présente que des ondes d'objet d'une plage de longueurs d'onde qui présente une deuxième longueur d'onde centrale, dans lequel une troisième des configurations d'éclairage ne présente que des ondes d'objet (14.1, 14.2, 14.3) d'une plage de longueurs d'onde qui présente une troisième longueur d'onde centrale, dans lequel la première longueur d'onde centrale est différente de la deuxième longueur d'onde centrale, dans lequel la troisième longueur d'onde centrale est différente de la première longueur d'onde centrale et de la deuxième longueur d'onde centrale, dans lequel des ondes d'objet qui sont émises par deux sources lumineuses ponctuelles les plus proches ne présentent pas de longueurs d'onde de la même plage de longueurs d'onde et dans lequel l'échantillon (122) est éclairé simultanément avec des ondes d'objet de la première configuration d'éclairage et de la deuxième configuration d'éclairage et de la troisième configuration d'éclairage provenant de directions discrètement différentes et, après une interaction avec l'échantillon (122), des ondes d'objet émises par ledit échantillon sont superposées sur le capteur d'image (K) et dans lequel les interférogrammes résultant de la superposition sont décomposés spectralement en interférogrammes partiels individuels en longueur d'onde.
